(19) Europäisches Patentamt / European Patent Office / Office européen des brevets

(11) **EP 3 649 490 B1**

(12) **EUROPEAN PATENT SPECIFICATION**

(45) Date of publication and mention of the grant of the patent:
**17.11.2021  Bulletin 2021/46**

(51) Int Cl.:
***G01V 1/28*** *(2006.01)*

(21) Application number: **18746760.0**

(22) Date of filing: **05.07.2018**

(86) International application number:
**PCT/IB2018/054982**

(87) International publication number:
**WO 2019/008538 (10.01.2019 Gazette 2019/02)**

(54) **SYSTEM AND METHOD FOR FULL WAVEFORM INVERSION OF SEISMIC DATA**

SYSTEM UND VERFAHREN ZUR VOLLWELLENFORMINVERSION SEISMISCHER DATEN

SYSTÈME ET PROCÉDÉ D'INVERSION DE FORME D'ONDE COMPLÈTE DE DONNÉES SISMIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2017  US 201762529297 P**

(43) Date of publication of application:
**13.05.2020  Bulletin 2020/20**

(73) Proprietor: **Chevron U.S.A. Inc.**
**San Ramon, California 94583 (US)**

(72) Inventors:
• **RAY, Anandaroop**
  **San Ramon, California 94583 (US)**
• **KAPLAN, Sam T.**
  **San Ramon, California 94583 (US)**
• **WASHBOURNE, John Kenneth**
  **San Ramon, California 94583 (US)**
• **ALBERTIN, Uwe K.**
  **San Ramon, California 94583 (US)**

(74) Representative: **Haseltine Lake Kempner LLP**
**Redcliff Quay**
**120 Redcliff Street**
**Bristol BS1 6HU (GB)**

(56) References cited:
• **ANANDAROOP RAY ET AL: "Frequency domain full waveform elastic inversion of marine seismic data from the Alba field using a Bayesian trans-dimensional algorithm", GEOPHYSICAL JOURNAL INTERNATIONAL., vol. 205, no. 2, 10 February 2016 (2016-02-10), pages 915-937, XP055514397, GB ISSN: 0956-540X, DOI: 10.1093/gji/ggw061**
• **RHYS HAWKINS ET AL: "Geophysical imaging using trans-dimensional trees", GEOPHYSICAL JOURNAL INTERNATIONAL., vol. 203, no. 2, 24 September 2015 (2015-09-24), pages 972-1000, XP055514403, GB ISSN: 0956-540X, DOI: 10.1093/gji/ggv326**
• **MRINAL K. SEN ET AL: "Transdimensional seismic inversion using the reversible jump Hamiltonian Monte Carlo algorithm", GEOPHYSICS, vol. 82, no. 3, 1 May 2017 (2017-05-01), pages R119-R134, XP055514624, US ISSN: 0016-8033, DOI: 10.1190/geo2016-0010.1**

**Description**

The disclosed embodiments relate generally to seismic imaging using techniques for determining subsurface velocities from seismic data and, in particular, to a method of determining subsurface velocities via full waveform inversion using a tree-based Bayesian approach which leads to a reduced number of parameters and basis functions with which to describe subsurface velocity (or other seismic properties), thereby reducing the computational cost.

Seismic exploration involves surveying subterranean geological media for hydrocarbon deposits. A survey typically involves deploying seismic sources and seismic sensors at predetermined locations. The sources generate seismic waves, which propagate into the geological medium creating pressure changes and vibrations. Variations in physical properties of the geological medium give rise to changes in certain properties of the seismic waves, such as their direction of propagation and other properties.

Portions of the seismic waves reach the seismic sensors. Some seismic sensors are sensitive to pressure changes (e.g., hydrophones), others to particle motion (e.g., geophones), and industrial surveys may deploy one type of sensor or both. In response to the detected seismic waves, the sensors generate corresponding electrical signals, known as traces, and record them in storage media as seismic data. Seismic data will include a plurality of "shots" (individual instances of the seismic source being activated), each of which are associated with a plurality of traces recorded at the plurality of sensors.

Seismic data is processed to create seismic images that can be interpreted to identify subsurface geologic features including hydrocarbon deposits. This process may include determining the velocities of the subsurface formations in order to perform the imaging. Determining the velocities may be done by a number of methods, such as semblance analysis, tomography, or full waveform inversion. Full waveform inversion (FWI) is a computationally expensive process that requires a huge amount of model parameterization. Some conventional FWI methods assume an optimal parameterization and do not try and sample over a variable number of parameters. None use a tree based probabilistic approach. A similar idea has been used by Hawkins et al. (2017) for airborne electromagnetic inversion, Dettmer et al. (2016) to quantify uncertainty for tsunami sea surface displacement, Hawkins & Sambridge (2015) for 2D ambient noise and 3D teleseismic tomography. However, these works are based on assumptions that are not valid for seismic data.

Improved seismic images from improved subsurface velocities allow better interpretation of the locations of rock and fluid property changes. The ability to define the location of rock and fluid property changes in the subsurface is crucial to our ability to make the most appropriate choices for purchasing materials, operating safely, and successfully completing projects. Project cost is dependent upon accurate prediction of the position of physical boundaries within the Earth. Decisions include, but are not limited to, budgetary planning, obtaining mineral and lease rights, signing well commitments, permitting rig locations, designing well paths and drilling strategy, preventing subsurface integrity issues by planning proper casing and cementation strategies, and selecting and purchasing appropriate completion and production equipment.

There exists a need for more accurate, cost-efficient FWI methods to allow better seismic imaging that will in turn allow better seismic interpretation of potential hydrocarbon reservoirs for hydrocarbon exploration and production. Reference may be made to any of the following documents, at least some of which are referred to elsewhere herein:

Ray et al. (2016), which corresponds to Anandaroop Ray et al, "Frequency domain full waveform elastic inversion of marine seismic data from the Alba field using a Bayesian trans-dimensional algorithm", Geophysical Journal International., vol. 205, no. 2, pages 915 - 937;

Hawkins & Sambridge (2015), which corresponds to Rhys Hawkins et al, "Geophysical imaging using trans-dimensional trees", Geophysical Journal International., vol. 203, no. 2, pages 972 - 1000;

Mrinal K. Sen et al, "Transdimensional seismic inversion using the reversible jump Hamiltonian Monte Carlo algorithm", Geophysics, vol. 82, no. 3, pages R119 - R134;

Hawkins et al. (2017), which corresponds to Rhys Hawkins et al, "Trans-dimensional Bayesian inversion of airborne electromagnetic data for 2D conductivity profiles", Exploration Geophysics, 2018, 49, pages 134 to 147; and

Dettmer et al. (2016), which corresponds to Jan Dettmer et al, "Tsunami source uncertainty estimation: The 2011 Japan tsunami", Journal of Geophysical Research: Solid Earth, 2016, pages 4483 to 4505.

In accordance with some embodiments, a method of transdimensional seismic full waveform inversion (FWI) using a tree-based Bayesian approach is disclosed. In this method, the observed seismic data inform the model likelihood. A mildly informative prior about subsurface structure also needs to be specified as input. The resulting posterior model distribution of seismic velocity (or other seismic properties) is then sampled using a trans-dimensional or Reversible Jump Markov chain Monte Carlo (RJ-McMC) method. Sampling is carried out in the wavelet transform domain of the seismic properties of interest, using a tree based structure to represent seismic velocity models. Convergence to a stationary distribution of posterior models is rapidly attained, while requiring a limited number of wavelet coefficients to define a sampled model. Better convergence from distant starting models as well as the ability to quantify model uncertainty are thus provided by this method. The subsurface velocities determined via the method of FWI is used for seismic imaging.

The present invention is defined by the independent claims, to which reference should now be made.

Specific embodiments are defined in the dependent claims.

BRIEF DESCRIPTION OF THE DRAWINGS

Figure 1 illustrates inverse discrete wavelet transforms (DWT) at five levels of truncation for the same image;
Figure 2 illustrates wavelet coefficients of the DWT;
Figure 3 illustrates a trans-D tree structure;
Figure 4 shows model and noisy data for a transmission dominated study;
Figure 5 shows a tree structure and corresponding node locations in the DWT domain;
Figure 6 illustrates trans-D Markov chain Monte Carlo (McMC) sampling progress;
Figure 7 illustrates Parallel Tempering;

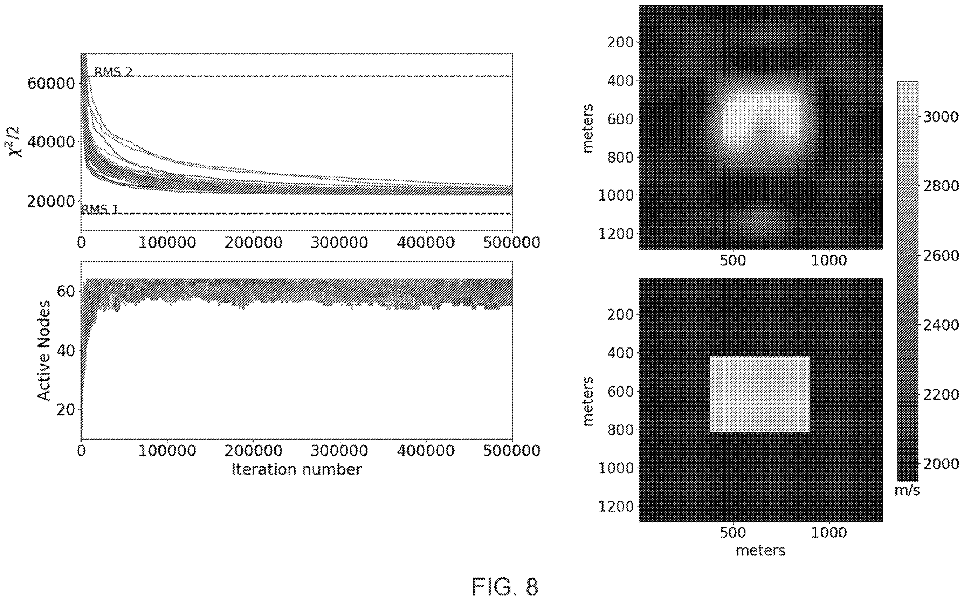

Figure 8 illustrates sampling statistics and the true model and inverted result;
Figure 9 illustrates Sampling statistics when level 5 of the DWT tree is made accessible to sampled models;

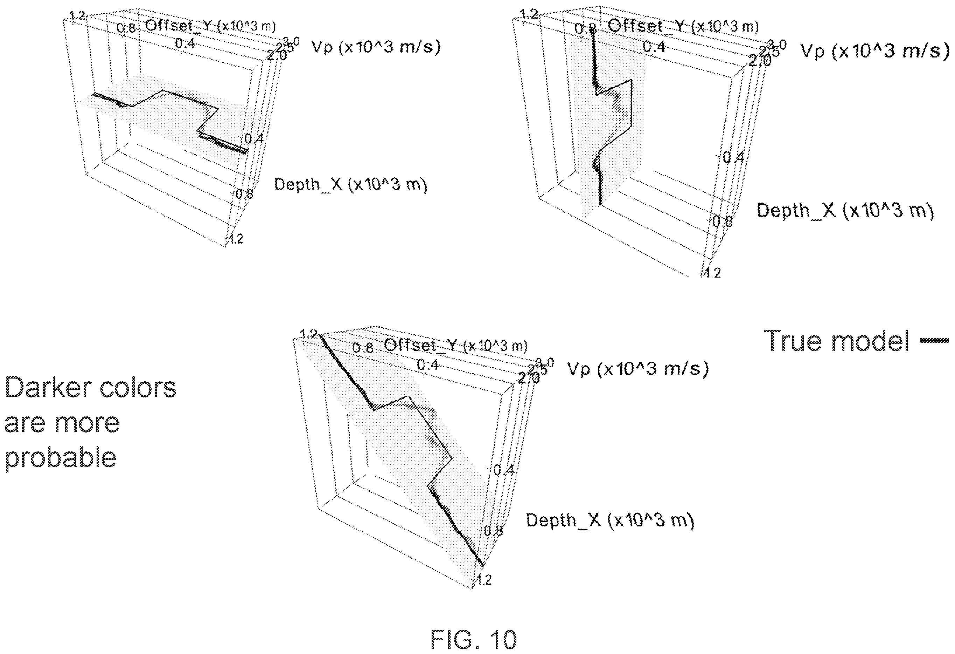

Figure 10 illustrates slices through the marginal probability density function of velocity for a model;
Figure 11 is a comparison of posterior uncertainties;
Figure 12 shows the model and noisy data for a surface reflection experiment on the Marmousi model;
Figure 13 shows the wavelet coefficient values for the reflection example;
Figure 14 shows progress of trans-D McMC sampling with parallel tempering;
Figure 15 illustrates marginal distributions of posterior velocity for the Marmousi experiment;
Figure 16 also illustrates marginal distributions of posterior velocity for the Marmousi experiment;
Figure 17 also illustrates marginal distributions of posterior velocity for the Marmousi experiment showing resolution with depth;
Figure 18 is a comparison of the true model at the maximum allowed DWT truncation level and the mean posterior model;
Figure 19 shows model responses from randomly selected posterior velocity models;
Figure 20 is a zoomed in trace from Figure 19;
Figure 21 illustrates 'butterfly plots' to compare data match *a posteriori;*
Figure 22 illustrates normalized inversion residuals;
Figure 23 illustrates 'butterfly plots' to compare data match *a posteriori;* and
Figure 24 is a block diagram illustrating a seismic imaging system, in accordance with some embodiments.

Like reference numerals refer to corresponding parts throughout the drawings.

DETAILED DESCRIPTION OF EMBODIMENTS

Described below are methods, systems, and computer readable storage media that provide a manner of seismic imaging using full waveform inversion (FWI). These embodiments are designed to be of particular use for seismic imaging of subsurface volumes in geologically complex areas.

Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details. In other instances, well-known methods, procedures, components, and mechanical apparatus have not been described in detail so as not to unnecessarily obscure aspects of the embodiments.

Seismic imaging of the subsurface is used to identify potential hydrocarbon reservoirs. Seismic data is acquired at a surface (e.g. the earth's surface, ocean's surface, or at the ocean bottom) as seismic traces which collectively make up the seismic dataset. The seismic data can be used in a full waveform inversion (FWI) method to determine subsurface velocities so that the seismic data can be properly imaged.

Advantageously, those of ordinary skill in the art will appreciate, for example, that the embodiments provided herein may be utilized to generate a more accurate digital seismic image (i.e., the corrected digital seismic image). The more accurate digital seismic image may improve hydrocarbon exploration and improve hydrocarbon production. The more accurate digital seismic image may provide details of the subsurface that were illustrated poorly or not at all in traditional seismic images. Moreover, the more accurate digital seismic image may better delineate where different features begin, end, or any combination thereof. As one example, the more accurate digital seismic image may illustrate faults more accurately. As another example, assume that the more accurate digital seismic image indicates the presence of a hydrocarbon deposit. The more accurate digital seismic image may delineate more accurately the bounds of the hydrocarbon deposit so that the hydrocarbon deposit may be produced.

Those of ordinary skill in the art will appreciate, for example, that the more accurate digital seismic image may be utilized in hydrocarbon exploration and hydrocarbon production for decision making. For example, the more accurate digital seismic image may be utilized to pick a location for a wellbore. Those of ordinary skill in the art will appreciate that decisions about (a) where to drill one or more wellbores to produce the hydrocarbon deposit, (b) how many wellbores to drill to produce the hydrocarbon deposit, etc. may be made based on the more accurate digital seismic image. The more accurate digital seismic image may even be utilized to select the trajectory of each wellbore to be drilled. Moreover, if the delineation indicates a large hydrocarbon deposit, then a higher number of wellbore locations may be selected and that higher number of wellbores may be drilled, as compared to delineation indicating a smaller hydrocarbon deposit.

Those of ordinary skill in the art will appreciate, for example, that the more accurate digital seismic image may be utilized in hydrocarbon exploration and hydrocarbon production for control. For example, the more accurate digital seismic image may be utilized to steer a tool (e.g., drilling tool) to drill a wellbore. A drilling tool may be steered to drill one or more wellbores to produce the hydrocarbon deposit. Steering the tool may include drilling around or avoiding certain subsurface features (e.g., faults, salt diapirs, shale diapirs, shale ridges, pockmarks, buried channels, gas chimneys, shallow gas pockets, and slumps), drilling through certain subsurface features (e.g., hydrocarbon deposit), or any combination thereof depending on the desired outcome. As another example, the more accurate digital seismic image may be utilized for controlling flow of fluids injected into or received from the subsurface, the wellbore, or any combination thereof. As another example, the more accurate digital seismic image may be utilized for controlling flow of fluids injected into or received from at least one hydrocarbon producing zone of the subsurface. Chokes or well control devices, positioned on the surface or downhole, may be used to control the flow of fluid into and out. For example, certain subsurface features in the more accurate digital seismic image may prompt activation, deactivation, modification, or any combination thereof of the chokes or well control devices so as control the flow of fluid. Thus, the more accurate digital seismic image may be utilized to control injection rates, production rates, or any combination thereof.

Those of ordinary skill in the art will appreciate, for example, that the more accurate digital seismic image may be utilized to select completions, components, fluids, etc. for a wellbore. A variety of casing, tubing, packers, heaters, sand screens, gravel packs, items for fines migration, etc. may be selected for each wellbore to be drilled based on the more accurate digital seismic image. Furthermore, one or more recovery techniques to produce the hydrocarbon deposit may be selected based on the more accurate digital seismic image.

In short, those of ordinary skill in the art will appreciate that there are many decisions (e.g., in the context of (a) steering decisions, (b) landing decisions, (c) completion decisions, (d) engineering control systems and reservoir monitoring in the following but not limited to: Tow Streamer, Ocean Bottom Sensor, VSP, DASVSP, and imaging with both primaries and free surface multiple, etc.) to make in the hydrocarbon industry and making proper decisions based on more accurate digital seismic images should improve the likelihood of safe and reliable operations. For simplicity, the many possibilities, including wellbore location, component selection for the wellbore, recovery technique selection, controlling flow of fluid, etc., may be collectively referred to as managing a subsurface reservoir.

The present invention includes embodiments of a method and system for FWI using a tree-based Bayesian approach which automatically selects the model complexity, allowing appropriate parameterization. Limited illumination, insufficient offset, noisy data and poor starting models can pose challenges for seismic full waveform inversion. The present invention includes a tree based Bayesian inversion scheme which attempts to mitigate these problems by accounting for data uncertainty while using a mildly informative prior about subsurface structure. The method samples the resulting posterior model distribution of compressional velocity using a trans-dimensional (trans-D) or Reversible Jump Markov chain Monte Carlo method in the wavelet transform domain of velocity. This allows rapid convergence to a stationary distribution of posterior models while requiring a limited number of wavelet coefficients to define a sampled model. The trans-D tree based approach together with parallel tempering for navigating rugged likelihood (i.e. misfit) topography provides a promising, easily generalized method for solving large-scale geophysical inverse problems which are difficult to optimize, but where the true model contains a hierarchy of features at multiple scales. In addition to the improvements to digital seismic imaging, this computer-implemented approach is significantly more computationally efficient than conventional methods.

The active source seismic full waveform inversion (FWI) method is, in principle, a simple idea. With minimal processing or manual intervention, it aims to provide not just an image of the subsurface, but a velocity model which when put though a forward operator, 'closely' matches the observed seismic field. This entails the solution of an inverse problem, with the forward physics governed by the seismic wave equation. However, such inverse problems with limited receiver coverage as well as frequency bandwidth are extremely nonlinear and thus very challenging to solve. Further, the presence of noise at inopportune frequencies confounds many optimization methods, and complicated earth models make for a very high dimensional model space that is difficult to work with in a computationally efficient manner. The nonlinearity alluded to manifests as local misfit minima, leading to models that are not optimally converged or are 'cycle skipped' in FWI parlance. Various promising methods to improve convergence exist, such as the estimation of time shifts to minimize the kinematic differences between initially modelled and observed data, the use of extended model domains and/or non-local wave physics. Another approach is to solve a sequence of constrained, locally convex subproblems. Yet other methods seek to improve the convexity of the misfit function through the use of an optimal transport distance, via the addition of artificial low frequencies to data, the iterative use of Wiener filters, or the use of quadratic penalty methods. One commonality of all these methods is an effort to make the misfit topography easier for optimization algorithms to navigate. To varying degrees, all of these methods work well under different circumstances, but cannot guarantee convergence. Further, given the various steps involved, these methods are not easily amenable to solution appraisal or uncertainty estimation. The present invention quantifies the credibility (in the Bayesian sense) with which we provide solutions to the FWI problem, when such solutions themselves are not easy to find. Further, the algorithm automatically selects and operates with a limited set of discrete wavelet transform coefficients of the velocity model. This leads to a reduced number of unknowns than cells in the forward modelling finite difference grid, thus allowing for tractable uncertainty estimation in 2-D and potentially 3-D FWI with minimal assumptions being made *a priori.*

In most conventional schemes for geophysical inversion, the model grid geometry is fixed, that is, the size of the cells and their number is not allowed to vary during inversion. Traditionally, solutions have focused on minimizing the following objective function:

$$\arg\min \emptyset(\mathbf{m}) = \|\mathbf{W}(\mathbf{d} - \mathbf{f}(\mathbf{m}))\|_2^2 + \lambda^2 \|\mathbf{Rm}\|_p^p, \tag{1}$$

where $\mathbf{m}$ is a model vector, $\mathbf{d}$ is the observed data and $\mathbf{f(m)}$ provides the forward modelled prediction due to $\mathbf{m}$. $\lambda^2$ is the regularization parameter, $\mathbf{R}$ is any operator which once applied to $\mathbf{m}$ produces a measure of length in the $p$ norm that is deemed sensible to keep small. The first term in (1) is the data misfit (weighted by the data precision $\mathbf{W})$, and the second is the regularization term designed to keep the model (or deviations of the model from a preferred model) small. The trade-off between the two is controlled by the so-called Tikhonov regularization parameter $\lambda^2$. This is akin to the statistical technique of ridge regression, that is, depending on the value of $\lambda^2$, for a linear problem and the $p = 2$ norm, the solution to (1) lies on the 'ridge' between the minimum of the data misfit term and the minimum of the model length term in order to simultaneously minimize both. Clearly, choices need to be made regarding the operator $\mathbf{R}$, the weight given to the model length, and the selection of model norm. Nonlinear least squares FWI solutions involving gradient descent or the use of the Jacobian matrix (or its inverse) in conjunction with Tikhonov regularization are easy enough to conceptualize, well understood, but notoriously slow to converge if $\mathbf{R}$ is poorly chosen. Choosing a smaller number of parameters, or using a $p$=1 norm in conjunction with a sparse model 'frame' does away with some of this hyperparameter selection.

Of course, the use of sparse model representations with small measures of length not only aid FWI convergence to a suitable solution of (1), there is another observation which can be made regarding parsimonious model parametrizations—simpler theories (models in our case) offer clearer insight. This is the approach used by Occam's inversion, which aims to produce the smoothest model or the sparsest model compatible with the data noise. However, these models are extremal models, and should not be looked at as being truly representative of the earth. To wit, we should consider models which are suitably simple, but also fit the data appropriately. Statistically, this is known as the model selection problem. The goal is to avoid producing simple models which have low variance but high bias, or complicated models with high variance but low bias. Ideally for geophysical inversion, we should be sampling over not one, but a range of models compatible with our data as well as our prior notions of the earth *and* its complexity.

In the methods outlined so far, the goal has been to find a minimum of (1), with the hope that it is a global minimum. As mentioned previously, no such convergence guarantee exists. Further, even if a global minimum were to be found, it would not preclude the existence of other models with similar misfits which fit within the data noise. These models will likely exhibit very different velocity structure, typical of a nonlinear problem. Continuing with the geophysical ideal mentioned previously, it is desirable to sample with a range of hyper-parameters (such as regularization parameters, number of cells, etc.), a range of models such that the models themselves are of an appropriate complexity, with seismic velocities that conform to log data, outcrops, and laboratory experiments while being compatible with the noisy seismic observations. Attempting to do this manually by trial and error would prove impossible due to the huge number of possibilities. However, even using a systematic approach would be complex since it would still need to quantitatively weight the outcomes due to each combination of hyper-parameters and inverted models.

The present invention accomplishes this task by re-examining (1) in a Bayesian sense. For every sampled model $\mathbf{m}$, loosely speaking, the misfit term provides a measure of the likelihood of the model, while the length of the model vector encapsulates our prior knowledge about the model, including its complexity. More rigorously speaking, a Bayesian formulation is

$$p(\mathbf{m}|\mathbf{d}) \propto p(\mathbf{d}|\mathbf{m})p(\mathbf{m}), \tag{2}$$

which for our purposes is better read from right to left as follows: p(**m**) is the prior probability of **m**, which we know independent of the observations **d.** We re-assess our prior notion **of m** by carrying out a seismic experiment which shows us how likely it is that **m** fits the observations. This weight is given by the likelihood function $p(\mathbf{d}|\mathbf{m})$. The result of re-weighting or updating our prior notion by the likelihood provides the *posterior* probability of observing the model **m**. The posterior probability is represented by the term $p(\mathbf{m}|\mathbf{d})$. We then repeat this process for various models **m** admissible by our prior notions until we obtain an ensemble of models represented by the probability density function or PDF $p(\mathbf{m}|\mathbf{d})$. We can thus turn the optimization problem (1) with many possible solutions into a sampling problem (2). Those of skill in the art will note that (2) is missing a normalization constant which ensures it integrates to unity, and thus is not truly a probability density function. Indeed, (2) is more representative of a multidimensional histogram until we normalize it by integrating over all models on the right-hand side:

$$p(\mathbf{d}) = \int_{\mathbf{m}} p(\mathbf{d}|\mathbf{m})p(\mathbf{m})\,\mathrm{d}\mathbf{m}, \tag{3}$$

where p(**d**) is known as the *evidence*. However, for model appraisal we are only interested in the relative probabilities of various models. We can thus sample up to a constant of proportionality using (2) for our purposes. It is important to note that our prior in (2) includes a specification over various levels of complexity (including parametrizations with different numbers of variables) and $p(d)$ is therefore the 'total' evidence.

For the optimization problem (1), as applicable to any geophysical problem, model regularization is necessary from a number of different viewpoints, be it for improving the stability of a matrix inverse, for keeping model fluctuations (or the update) small, or for keeping the model (or the update) close to a preferred model. However, the number of parameters with which to describe the model, a measure of the complexity of the model, can also be treated as an unknown to sample, without explicitly requiring regularization. With this approach, we consider not only the simplest or smoothest model with which to describe the data, but a collection of models with a *different number* of parameters which are compatible with the observed data. The trans-dimensional inversion method based on birth/death Monte Carlo and the more general Reversible Jump Markov chain Monte Carlo (RJ-McMC) method accomplishes this task. For a 1-D model, this would mean sampling over a variable number of layers. For 2-D models, Voronoi cells with different numbers of cells have been widely used. In effect, the trans-D algorithm via Bayes' theorem performs the task of model selection, with regard to the complexity of the model. The fact that models are neither overfit nor underfit is based on the idea of Bayesian parsimony. An 'Occam factor' which penalizes overly complicated models, is built into the framework of Bayes' theorem when formulated appropriately. To examine this argument, we note that a trans-D model vector is defined as $\mathbf{m} = [\mathbf{m}_{k,}\,k]$, where $\mathbf{m}_k$ is a model with k parameters that describe compressional velocity (for the FWI application of the present invention). It is possible to derive from the joint probability of the data and models, that

$$p(k|\mathbf{d}) = \frac{p(\mathbf{d}|\mathbf{m}_k,k)}{p(\mathbf{d})}\left[\frac{p(\mathbf{m}_k|k)p(k)}{p(\mathbf{m}_k|k,\mathbf{d})}\right]. \tag{4}$$

Treating the total evidence p(d) as a constant, we get

$$p(k|\mathbf{d}) \propto p(\mathbf{d}|\mathbf{m}_k,k)\left[\frac{p(\mathbf{m}_k|k)p(k)}{p(\mathbf{m}_k|k,\mathbf{d})}\right]. \tag{5}$$

The term on the left-hand side of (5) is the posterior probability (after performing the experiment), on inferring the number of parameters k. The first term on the right is the likelihood of k parameters fitting the data adequately. To examine the bracketed second term on the right, we first note from the definition of joint and conditional probability that $p(\mathbf{m}_k,k) = p(\mathbf{m}_k|k)p(k)$. Therefore, the bracketed term on the right-hand side is the ratio of prior model probability to posterior probability for a *k*-parameter model. The more number of parameters k there are, the more thinly spread (i.e. lower) the prior probability is, since the prior PDF needs to integrate to 1 over a larger volume. Since acceptable *k*-parameter models occupy *a posteriori* a tiny amount of the prior space, the *k*-parameter posterior probability is generally higher (i.e. peakier) than the prior. The more parameters k are used, the less therefore is the bracketed fraction. However, the likelihood of the *k*-parameter fit increases the more number of parameters k we use. In a trans-D formulation, the bracketed factor and the data likelihood trade off, *automatically* providing a solution akin to regularization, depending largely on the *data.* With a uniform probability for $p(k)$, and some simplifying assumptions discussed in (Ray *et al.* 2016), the bracketed fraction can be interpreted as the ratio of the posterior accessible volume to the prior accessible volume, sometimes known as the 'Occam Factor.' This formulation allows an inversion to self-parameterize to good effect, providing higher model resolution in areas with better data coverage and low noise.

Now that we have interpreted the trans-D formulation, lest it appear that the right-hand side of (5) depends on $\mathbf{m}_k$ while the left does not, we can simply use the definition of conditional probabilities again to verify that the right-hand side of (5) equals $p(k,\mathbf{d})$. This is entirely consistent with (4), since by definition, $p(k|\mathbf{d}) = p(k,\mathbf{d})|p(\mathbf{d})$. Trans-D outperforms inversion based on subspace transformations using B-splines for a seismic surface wave tomography application. Alternatives to a trans-D formulation based on evaluating the evidence for different parameterizations via the *marginal likelihood $p(\mathbf{d}|k)$* or the evidence for a given hypothesis (in our case a *k*-parameter model) are known. However, this involves the computationally prohibitive task of finding the evidence for each *k*-parameterization, and is only feasible for certain kinds of geophysical inversion.

For the exploration seismic FWI problem, solutions to characterize the full nonlinear uncertainty have only recently been put forward, owing to the huge computational cost of a forward evaluation. Some methods use a Bayesian solution based on randomized source subsampling but make use of a fixed parameterization while assuming a Gaussian distribution about the maximum a posteriori (MAP) model. Others use a genetic algorithm (GA) in conjunction with model resampling using the neighbourhood algorithm followed again by Gibbs sampling. They use a two grid approach, coarse for the inverse model, and fine for the forward model. However, the data do not determine the coarseness of the inverse model grid, and the quality of the estimated uncertainty also depends on the input ensemble from the GA to the NA+GS algorithm. Other methods present a two grid approach which involves operator upscaling though the inverse model grid is fixed. All of these methods are promising efforts to quantify seismic FWI uncertainty but do not address the model selection problem. The only efforts we are aware of which have attempted this with trans-D inversions are for the vertical seismic profile (VSP) inversion problem and for the elastic FWI problem, but both assume a laterally invariant earth model which is, of course, not representative of the true earth model that must be obtained for the purpose of hydrocarbon exploration and production. In theory, the Bayesian model selection principles demonstrated for 1-D and 2-D earth models are equally applicable for 3-D inversion. However, as pointed out by Hawkins & Sambridge (2015), computationally efficient parameterizations for trans-D problems in 3-D are not easy to construct, and the inclusion of prior knowledge about geometric structure is difficult.

The recent work of Hawkins & Sambridge (2015) has demonstrated that any basis function set which can be represented by a tree based structure can be used as a valid model representation for trans-D inversion. A major advantage of using this formulation is that from both a theoretical and practical efficiency point of view, it is agnostic to the spatial dimensionality of the earth model, be it 1-D, 2-D or 3-D. In an embodiment, we specifically use wavelet basis functions and the discrete wavelet transform (DWT), which is readily amenable to a hierarchical tree based representation. Wavelet transforms with a suitable basis set (e.g. CDF 9/7) are routinely used to compress image information (e.g. JPEG 2000). This makes the transform domain attractive for parsimonious geophysical model representations, as will be demonstrate with synthetic examples. As mentioned previously, curvelet or wavelet basis sets have been used for exploration seismic FWI, but in an optimization set up. As discussed by Hawkins & Sambridge (2015), a valid wavelet tree which is incompletely filled can represent a hierarchy of features from low to high spatial wavenumbers. In conjunction with the trans-D algorithm, this provides a multiresolution approach which adaptively parameterizes according to the observed data. Adaptive inversion grid meshing has been carried out, but these used fixed criterions for the adaptation rather than sample over a range of parameterizations where model complexity is dictated by the data. Successful recent applications of such a trans-D tree based approach can be found in Hawkins *et al.* (2017) for airborne electromagnetic inversion, Dettmer *et al.* (2016) to quantify uncertainty for tsunami sea surface displacement, Hawkins & Sambridge (2015) for 2-D and 3-D seismic tomography, and the present invention is the first use of the approach for seismic FWI.

For 1-D, 2-D and 3-D models, the tree representation requires use of *modified* binary tree, quaternary tree and octree structures respectively. For all these representations in the wavelet transform domain, the first node coefficient (which is at the top level of the tree) represents the average value of velocities in the model (to be presented to the finite difference operator). This node branches into 1, 3 and 7 nodes (again, for 1-D, 2-D and 3-D models respectively) at the second level, with coefficients at this level representing the strength of basis functions with wavelengths of roughly half the length scale of the total model. From this level downwards, each node branches into a pure binary tree, quadtree or octree where each child has 2, 4 and 8 children exactly. The tree depth is restricted by the size of the forward model grid. Each successive depth level (in the inverse wavelet transform domain) represents finer scaled features in the velocity model. In all the work presented here, we use the modified restricted quaternary trees as we are working in 2-D but those of skill in the art will recognize that the methods are equally applicable in 1-D or 3-D by using the appropriate tree structure.

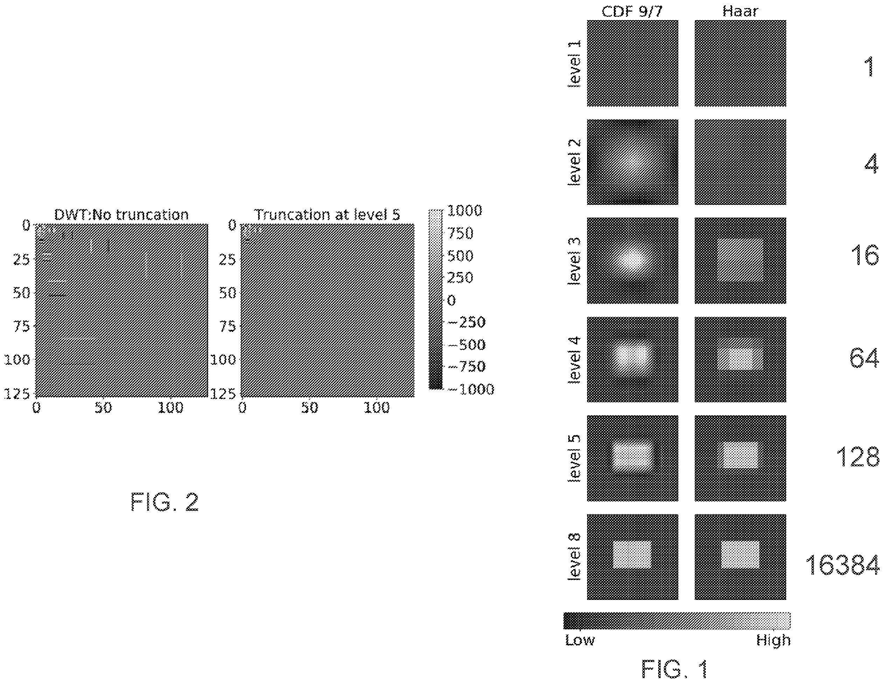

Another advantage of working with the tree based wavelet transform representation is that different wavelet bases can be used, depending on the problem at hand. For transmission dominated problems, smooth basis functions such as CDF 9/7 may be appropriate. For reflection dominated problems, sharp basis functions such as the Haar wavelets could be used. Fig. 1 shows a 128×128 pixel image, at five levels of truncation in the transform domain, inverse transformed back to the image domain using these two kinds of basis functions. Level 8 corresponds to no truncation for a $128 \times 128$ square image, as $2^{level-1} = 128$. A limitation of using the discrete wavelet transform (DWT) is that all dimensions must be a power of two. While we use square velocity models in this work, Hawkins & Sambridge (2015) have shown how to use the DWT for rectangular model domains, by using more than one root node for the wavelet tree model. Fig. 2 shows a comparison in the wavelet transform domain using the CDF 9/7 basis, between the full wavelet transform and the truncated version at level 5. The level 5 representation requires a handful from a maximum of $16 \times 16$ coefficients to be non-zero, while providing the approximation in the 5th row, 1st column of Fig. 1.

Sampling the posterior model PDF (2) is done via the trans-D McMC algorithm, details of which are provided below. In particular, we sample different wavelet trees, adding nodes, deleting nodes or modifying node coefficients according to a prior specification and the likelihood function.

We start the algorithm with a very simple model, typically a tree with only one root node. We then allow the algorithm to iteratively add active nodes to the tree ('birth'), prune them ('death'), or simply modify the coefficient value at an existing active node ('update'). This is all done as the data may demand via the acceptance probability $\alpha$. This process is repeated until the McMC chain converges to a stationary chain of samples. Details of convergence monitoring for the trans-D inversion and the parallel tempering algorithm used to escape local likelihood maxima (misfit minima) are detailed in Ray et al. (2016).

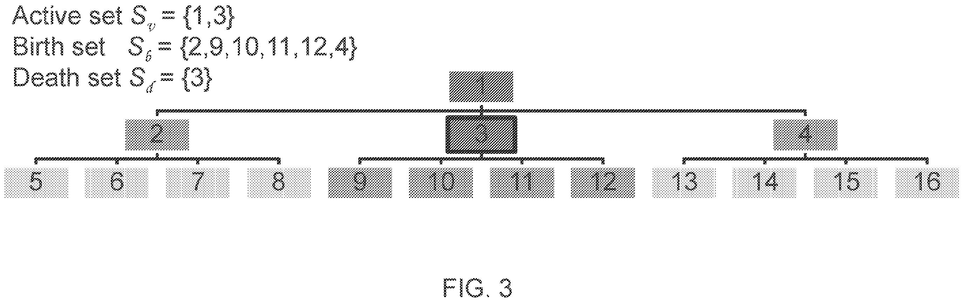

Following the notation of Hawkins & Sambridge (2015), we need to keep track of the set of active nodes $S_v$, the set of nodes from which to give birth $S_b$, and the set of active nodes which have no children ('leaves' of the tree) for death $S_d$. An example tree model with k=2 active nodes and the active, birth and death sets illustrated is shown in Fig. 3.

At every step of the McMC, one of three possible moves is randomly chosen with equal probability: update a node coefficient, birth, or death. For a node update, a node is selected at random from the sets of nodes $S_v$, and the coefficient value is perturbed using a Gaussian proposal. Typically, we set the standard deviation of the update to be 5 percent of the width of the uniform bounds at the particular node's depth. This move does not change the model dimension.

A birth move involves the following steps:

If $k < k_{max}$,

(1) make a copy **m'** of the initial tree model **m** (i.e. coefficient values and the three node sets);
(2) randomly select node to activate from birth set $S_b$ of initial model;
(3) remove selected node from birth set $S'_b$ of proposed model;
(4) propose coefficient value $v'$ uniformly from the uniform prior coefficient range for the selected node's depth level;
(5) add selected node to active set $S'_v$ of proposed model;
(6) add selected node to death set $S'_d$ of proposed model;
(7) unless parent is the root node, remove selected node's parent from the death set $S'_d$ (if the parent is in the death set), as the parent is no longer a leaf node.
(8) find children of the selected node, add them to the birth set of proposed model $S'_b$ (if the children are within the max tree depth restriction).

This move proposes an increase in dimension, $k' = k + 1$.

A death move involves the following steps, and is the reverse of the birth step:

If $k > k_{min}$,

(1) make a copy **m'** of the initial tree model **m** (i.e. coefficient values and the three node sets);
(2) randomly select a tree node to remove from death set $S_d$ of start model;
(3) assign zero to the selected node coefficient (simply for completeness);
(4) remove the selected node from the death set $S'_d$ of the proposed model;
(5) find and remove the selected node from the active set $S'_v$ of the proposed model;
(6) find and remove children of the selected node from the birth set $S'_b$ (if children are within the depth restriction)
(7) add the selected node to birth set $S'_b$ of the proposed model;
(8) unless the parent of the selected node is the root, add parent node to the death set $S'_d$ if it is now a leaf node.

This move proposes a decrease in dimension, $k' = k - 1$.

The probability that the McMC chain moves from a model **m** to **m'** is given by the acceptance probability $\alpha$. For tree based trans-D McMC, it takes different forms for each of the three different move types, and the expressions given below are derived in detail by Hawkins & Sambridge (2015).

For the update move, there is no change in dimension, and when proposing from a uniform prior coefficient range as we have done, it is simply the likelihood ratio:

$$\alpha(\mathbf{m} \to \mathbf{m}') = \min\left[1, \frac{\mathcal{L}(\mathbf{m}')}{\mathcal{L}(\mathbf{m})}\right].$$

For the birth move, the acceptance probability is

$$\alpha(\mathbf{m} \to \mathbf{m}') = \min\left[1, \frac{p(k+1)}{p(k)} \frac{p(T|k+1, h)}{p(T|k, h)} \frac{\mathcal{L}(\mathbf{m}')}{\mathcal{L}(\mathbf{m})} \frac{|S_b|}{|S'_d|}\right],$$

where $|S_x|$ is the number of elements in set $S_x$ and $h$ is the maximum depth level restriction. For the death move, the acceptance probability is

$$\alpha(\mathbf{m} \to \mathbf{m}') = \min\left[1, \frac{p(k-1)}{p(k)} \frac{p(T|k-1, h)}{p(T|k, h)} \frac{\mathcal{L}(\mathbf{m}')}{\mathcal{L}(\mathbf{m})} \frac{|S_d|}{|S'_b|}\right].$$

If the prior probability on the number of nodes is uniform then

$$\frac{p(k+1)}{p(k)} = \frac{p(k-1)}{p(k)} = 1.$$

However, if a Jeffrey's prior has been used, as done in an embodiment, then

$$\frac{p(k+1)}{p(k)} = \frac{k}{k+1},$$

and

$$\frac{p(k-1)}{p(k)} = \frac{k}{k-1}.$$

If a proposed model is accepted with probability $\alpha$, it is stored as the next sample. If the proposal is rejected, then the previous model in the McMC chain is retained as the next sample.

The most difficult part, conceptually, of this algorithm is the counting of the number of possible arrangements of a tree given the number of active nodes k, required to calculate $\alpha$ for birth and death proposals. For a binary tree, if there are $n$ nodes, then for node $i$, say we can have $C_{i-1}$ arrangements of the nodes preceding it. This leaves $C_{n-i}$ arrangements possible for the remaining nodes. Since the arrangements are independent, the total number of arrangements for node $i$ is $C_{i-1} \cdot C_{n-i}$. But since there are $n$ nodes we have to sum over all $i$ and so the total number of arrangements for $n$ nodes is

$$C_n = \begin{cases} \sum_{i=1}^{n} C_{i-1} C_{n-i}, \\ 1, \end{cases}$$

if n ≥ 1
if n = 0.

For $n = 1$, we set $C_0 = 1$ as there is exactly one way to make a tree with only 1 node. This defines the Catalan number sequence via a recurrence relation, with a base case defining $C_0 = 1$. One can use this logic to construct the number of arrangements of higher order and more general trees as well (Hawkins & Sambridge 2015). $C_n$ can easily be solved via recursion, but on closer examination we see that to obtain $C_3$ we need to compute $C_2$ and $C_1$. But if we have already computed $C_2$, we can store this value and re-use it without another recursive call. This is known as *memoization,* a technique extensively used in dynamic programming. This becomes very useful when there are many recursive calls made, as in the case of a pure quaternary tree, where the number of arrangements $Y_n$ can be written thus

$$Y_n = \left\{ \sum\nolimits_{i=1}^{n} Y_{i-1} \sum\nolimits_{j=1}^{n-i+1} Y_{j-1} \sum\nolimits_{k=1}^{n-i-j+2} Y_{k-1} \times Y_{n-i-j-k+2}, \right.$$
$$1,$$

if $n \geq 1$
if $n = 0$.

In addition to memoizing $Y_n$ we can memoize each of the partial sums over $j$ and k, as the partial sums are functions of the sum upper limit. The modified quaternary tree required for the Cartesian DWT has one root node and three children, each of these three children follow pure quaternary tree structures. We can write the number of arrangements thus:

$$T_n = \sum\nolimits_{i=1}^{n} Y_{i-1} \sum\nolimits_{j=1}^{n-i+1} Y_{j-1} Y_{n-i-j+1},$$

taking advantage of the fact that we can again memoize partial sums. Finally, we can treat restricted tree depths with another index representing the depth level restriction. For the case of binary trees, a restriction to a depth $h$ is given by

$$C_{n,h+1} = \sum\nolimits_{i=1}^{n} C_{i-1,h} C_{n-i,h},$$

with

$$C_{n,h} = \begin{cases} 1, & \text{if } n = 0 \quad \text{and } h = 0, \\ 0, & \text{if } n > 0 \quad \text{and } h = 0, \\ 1, & \text{if } n = 0 \quad \text{and } h \geq 0. \end{cases}$$

We can apply exactly the same restricted binary tree arrangement logic to the modified restricted quaternary tree arrangement count. All we need to do is modify the numbers of arrangements at any level h by simply making the calculation depend on the previous level h - 1.

For additive noise, which by central limiting is asymptotically Gaussian (especially in the frequency domain, as shown in Ray et al. 2016), we define the model likelihood function $L(\mathbf{m}) = p(\mathbf{d}|\mathbf{m})$ as

$$p(\mathbf{d}|\mathbf{m}) = \exp\left(-\frac{1}{2}[\mathbf{f}(\mathbf{m}) - \mathbf{d}]^t \mathbf{C_d}^{-1}[\mathbf{f}(\mathbf{m}) - \mathbf{d}]\right), \qquad (6)$$

where $\mathbf{C_d}$ is the covariance matrix of data errors. Since the DWT is a linear transformation, we can write

$$\mathbf{f}(\mathbf{m}) = \mathbf{F}(\mathbf{Hm}), \qquad (7)$$

where **F** is the seismic forward operator, **H** is the inverse DWT operator and **m** is a model vector represented by coefficient values on a wavelet tree. In other words, **Hm** is the 2-D velocity model fed to a variable density, acoustic and isotropic finite difference engine. The source signature is assumed known, or it can be derived as a maximum likelihood estimate as a function of the model, as shown in Ray *et al.* (2016).

In this embodiment, we only concern ourselves with changes in velocity in the earth, assuming that density changes are known or that there are no changes in density. This is not a limitation of the method, which easily generalizes to more variables, as will be recognized by those skilled in the art. The prior models need to specify the probabilities of nodes on a tree. Hence we can write

$$p(\mathbf{m}) = p(\mathbf{v}, T, k), \qquad (8)$$

where v is a vector of velocities (in this embodiment) in the *wavelet transform domain,* which is a point to note, that makes the tree based formulation different from layer or cell based trans-D. T is a particular type of wavelet tree (modified restricted quaternary trees for our 2-D application) and $k$ is the number of active nodes representing a valid tree structure. Using the chain rule of probabilities, we can write:

$$p(\mathbf{v}, T, k) = p(\mathbf{v}|T, k)p(T|k)p(k),$$

$$p(\mathbf{v}, T, k) = p(T|k)p(k) \prod_{i=1}^{k} p(v_i|T, k). \tag{9}$$

The last term under the product assumes that the wavelet coefficients at each node, given k active nodes for the specific tree type T, are independent of each other. Hawkins & Sambridge (2015) and Dettmer *et al.* (2016) simply use wide uniform bounds at each node position. However, as can be seen in Fig. 3, these coefficient values span many orders of magnitude, but at a particular depth level the values are all within a limited span. To elaborate, for most naturally occurring images, values are generally more extreme at the top levels of the tree (representing coarser features) than values at depth levels that are farther from the origin (representing finer features). This is exactly analogous to a Fourier spectrum of most natural images containing stronger low wavenumber content as opposed to high wavenumber content. $p(k)$ is simply a prior on the number of nodes. It could be constant (i.e. uniform) or a Jeffrey's prior inversely proportional to the number of active nodes (Hawkins & Sambridge 2015). The crucial development by Hawkins & Sambridge (2015) was the definition of $p(T|k)$. If we assume that given $k$ active nodes, all valid tree structures with active nodes from the root node at the top down to a specified maximum depth are equally probable—a reasonable assumption since it would imply that any velocity model will possess features at coarse as well as fine scales-then to define this probability, we need to count the number of arrangements of such valid trees $N_k$. The probability is simply given by

$$p(T|k) = \frac{1}{N_k}. \tag{10}$$

Conventional methods have no way of counting the number of arrangements of a modified, restricted tree. For general restricted trees, there is an efficient recursive method to calculate $N_k$, presented in Hawkins & Sambridge (2015). In the present invention, we provide a less general, probably easier to implement, efficient recursive pseudo-code for the 2-D wavelet tree structure. It can be modified easily for the 1-D or 3-D wavelet trees for the DWT.

In another embodiment, obtaining the posterior model PDF requires sampling (2) using the Metropolis-Hastings-Green algorithm. The criterion to accept or reject a model proposal is given by the probability

$$\alpha(\mathbf{m} \to \mathbf{m}') = \min\left[1, \frac{p(\mathbf{m}')}{p(\mathbf{m})}\frac{q(\mathbf{m}|\mathbf{m}')}{q(\mathbf{m}'|\mathbf{m})}\left(\frac{\mathcal{L}(\mathbf{m}')}{\mathcal{L}(\mathbf{m})}\right)^{\frac{1}{\tau}}|\mathbf{J}|\right], \tag{11}$$

where $q(\mathbf{m}'|\mathbf{m})$ is the proposal probability of stepping from model m to m' and $|\mathbf{J}|$ is the determinant of the Jacobian of transformation of variables while changing dimension. It computes to unity for the Birth-Death algorithm used in this case. To escape local misfit minima (likelihood maxima), various *interacting* McMC chains are run in parallel at different 'temperatures' $\tau$ using the Parallel Tempering algorithm. Posterior inference is carried out using the unbiased $\tau = 1$ chain. Details of the sampling methodology and model proposals were previously provided.

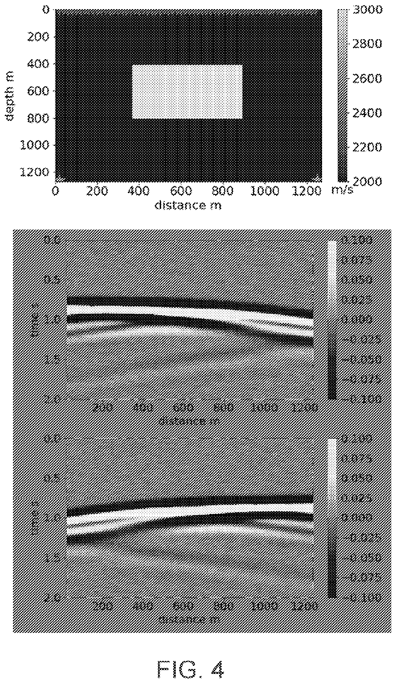

In an embodiment for a transmission-dominated use, the model and noisy synthetic data are shown in Fig. 4. 62 receivers were placed on the surface, at a spacing of 20 m, with two sources placed at a depth of 1260 m at the edges of the model. The model is 128 × 128 cells with a grid spacing of 10 m. The source is a Ricker wavelet centered at 5 Hz. Uncorrelated Gaussian noise at 0.5 per cent of the maximum shot amplitude was added to all the traces. The presence of correlated noise for real-world bandpassed time domain data, not shown in this embodiment but within the scope of the present invention, will require the use of a modified likelihood in (6), with off diagonal terms in the data covariance.

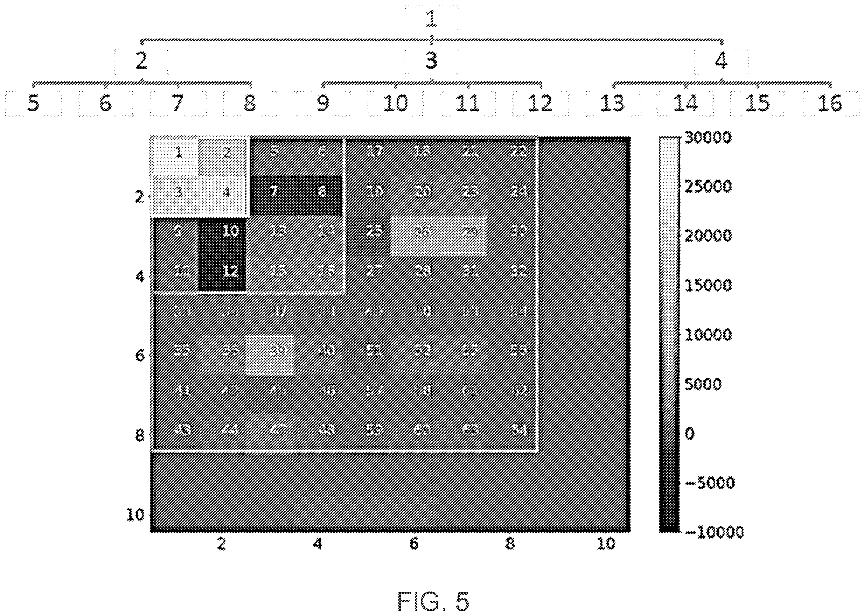

A CDF 9/7 basis was chosen for the inversion as it provided a lower $X^2$ misfit at level 5 truncation than the Haar basis (see Fig. 2). Prior bounds for $p(v_i|T, k)$ were set to be bounded uniform following Hawkins & Sambridge (2015). We are careful not to overspecify the bounds-as we explain in this section. Referring to Fig. 5 for a 2-D image, level 1 corresponds to the root node of the tree, with one coefficient numbered 1. Level 2 has three children nodes (of the root) numbered 2-4. From level 2 on, the tree follows a quarternary structure, with each of the nodes having 4 children each. Therefore, level 3 contains the nodes numbered 5-16. Finally, level 4 contains each of the 4 children of all nodes in level 3, numbered 17-64. The minimum and maximum wavelet coefficients of the true model were found at every level, and the bounds for all coefficients at this level were set to be 2 per cent less than as well as greater than the extremal values. As with all Bayesian methods, the necessity of prior specification can be viewed as both a blessing and a curse. If one knows absolutely nothing about earth structure and likely velocity variations in the earth, this method will not be of much use, but all geophysical inverse problems require some constraining assumptions to be made and this is not unique a limitation of our approach. However, if we have some idea of what structure could be, we could indeed quantify this interpretive aspect via setting prior bounds in this manner. Example prior model realizations using our method are shown for the second synthetic example. The transform domain provides a very elegant method of specifying compressed sampling bounds, for conceptual geological models (images) in the inverse transform domain. The inverse transform domain is the domain in which we are used to thinking. The nodes can be conveniently represented with a linear tree array numbered in the so called 'Z' or 'Morton' order which is equally applicable for 3-D compression. The array index values follow a self-similar Z pattern. Binary interleaving translates the linear indices to their appropriate row and column position in the transform domain image. A word of caution is necessary here-inverse transformed images from wavelet tree models can contain unphysical features such as negative velocities, so it is important to set the prior probabilities of these models to zero. A stochastic approach with a mechanism for navigating difficult topography is a must for the use of this method, as iterative optimization methods may get stuck in the objective function landscape between two zones separated by infinitely high ridges (i.e. zero posterior probability). Our solution has been to use Parallel Tempering for this purpose.

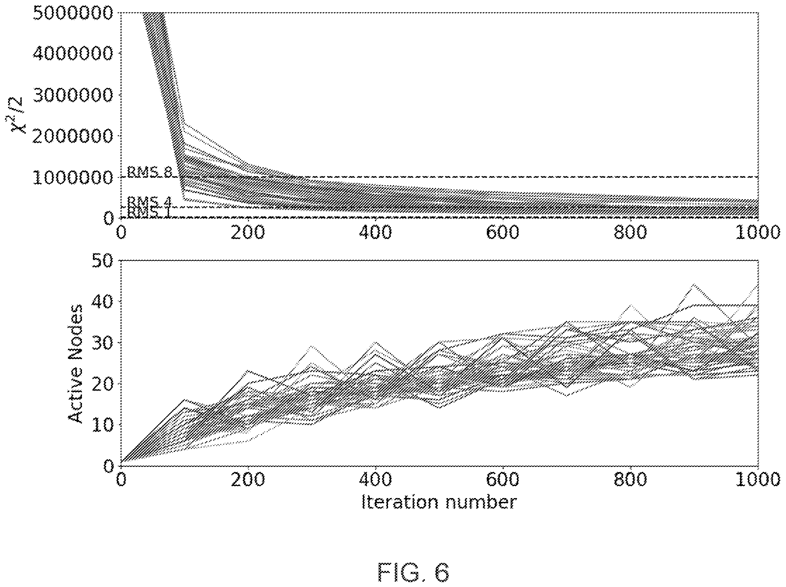

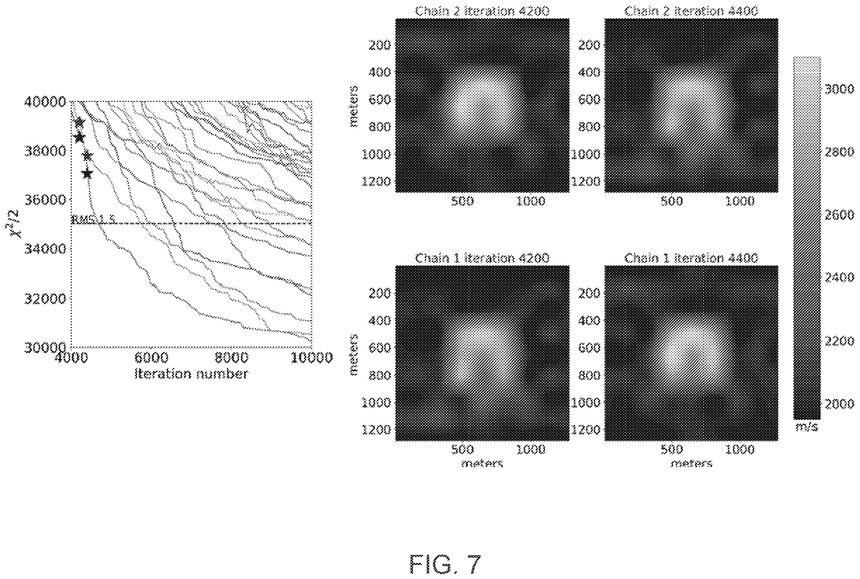

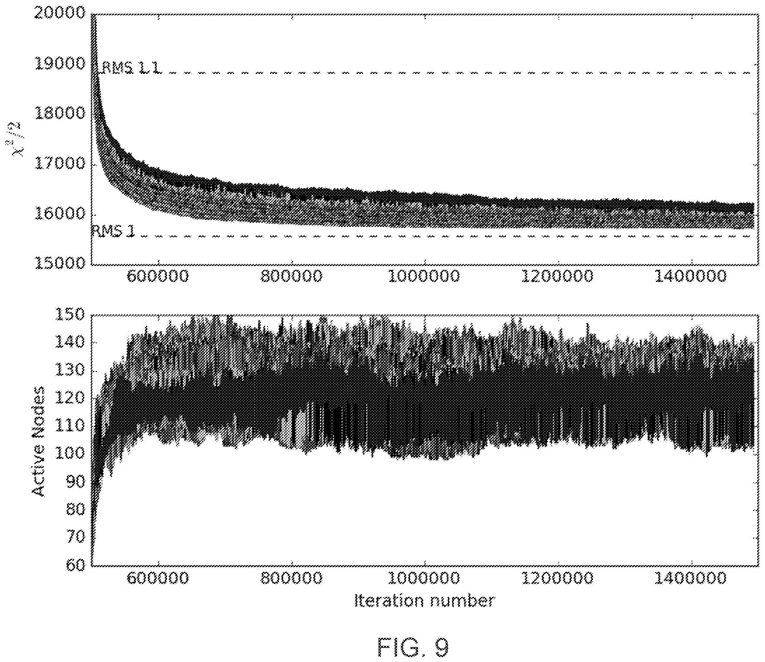

The algorithm very quickly reduces misfit till it reaches RMS (root mean square) misfits close to 2, within just 400 iterations (Fig. 6). The model complexity is also seen to increase as misfit decreases. Since we are using parallel tempering, each Markov chain at a different temperature is represented by a different color. Posterior inference is carried out only from the chain at $\tau = 1$. By construction, parallel tempering ensures that the lower temperature chains always contain the lowest misfits, while higher temperature chains escape less likely (i.e. higher) misfits to escape local misfit minima (Ray et al. 2016) as illustrated in Fig. 7. Forty-three parallel, interacting McMC chains were run with log-spaced temperatures between 1 and 2.5 to temper the likelihood function in (11). Though good-fitting models were obtained fairly quickly as evidenced from the misfit decrease and models sampled (Figs 6 and 7), to obtain an estimate of model uncertainty we needed to sample longer, and the RMS misfit stayed around 1.18 ($X^2/2$ of around 20 000), by most measures a good indication of convergence (Fig. 9). From this figure, we can see that the mean sampled model is quite close to the true velocity model. However, the number of active nodes frequently hits 64, the maximum number allowed for a tree depth restricted to level 4. This implies that the data demand a more complicated parametrization.

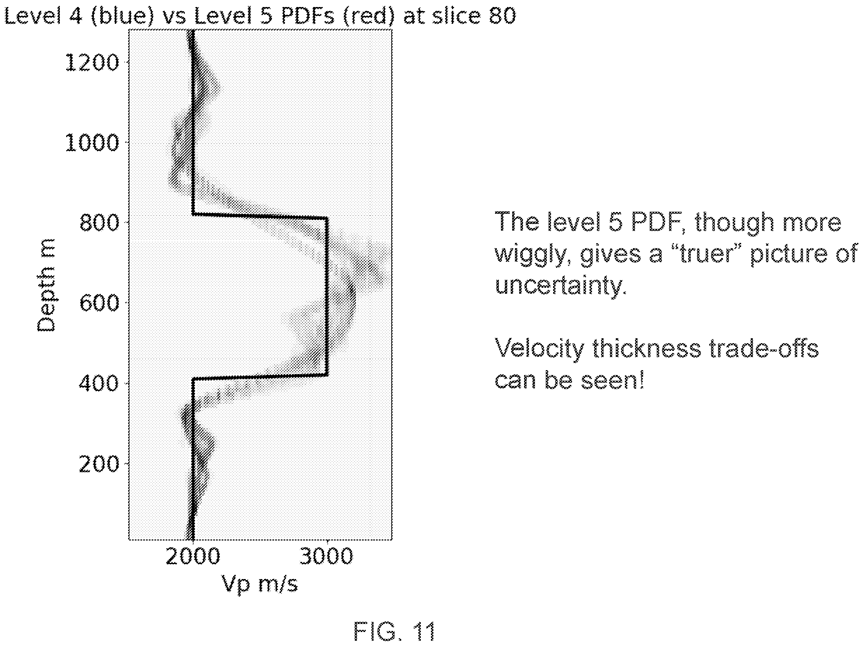

When we allowed the wavelet tree models to occupy level 5, for a total of 256 possible active nodes, we sample for far longer and arrive at the situation described in Fig. 9. The RMS drops down from 1.18 to 1.004, and the number of coefficients sampled now goes up to 140, though never exceeding 150. We can find the velocity models corresponding to each of these tree models, and instead of computing the mean as we did in Fig. 7, we can now compute the marginal PDFs of velocity at every subsurface location, and display these as 'probability cubes' in Fig. 11. The true velocity model is shown in black, coincident with slices through the probability cube, where darker colors at any location are indicative of a high probability of the position and velocity at that point in the cube. The edges of the anomaly seem to be well resolved, with velocities neatly clustered together, but the center of the anomalous region is not, probably because of the lack of illumination at that point. Also note the multimodality at certain spatial locations, where more than one velocity is possible. Velocity trade-offs are also visible with lower velocities along a propagation path leading to higher velocities at a different location along the propagation path. Had we decided to end our sampling at Level 4, we would have obtained a more optimistic picture of uncertainty, though with slightly worse data fit. A comparison of uncertainty at the two levels is provided in Fig. 11. This figure illustrates again how choices made during inversion affects our conclusions about the subsurface.

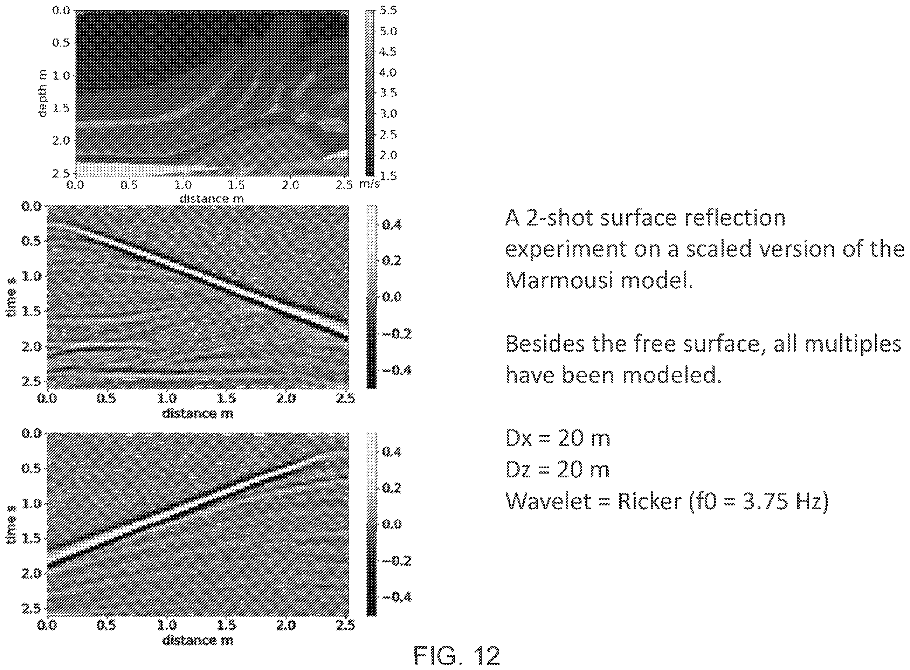

In another embodiment, the method may be applied to a surface reflection problem. This example is based on a scaled version of the Marmousi model. It is 128 $\times$ 128 pixels, with a grid spacing of 20 m. The source wavelet, assumed known, is a Ricker with peak frequency at 3.75 Hz. Two shots were modelled, with uncorrelated Gaussian noise at 0.2 per cent of the maximum amplitude added to all traces. The model and noisy data (minus the direct wave) are shown in Fig. 12.

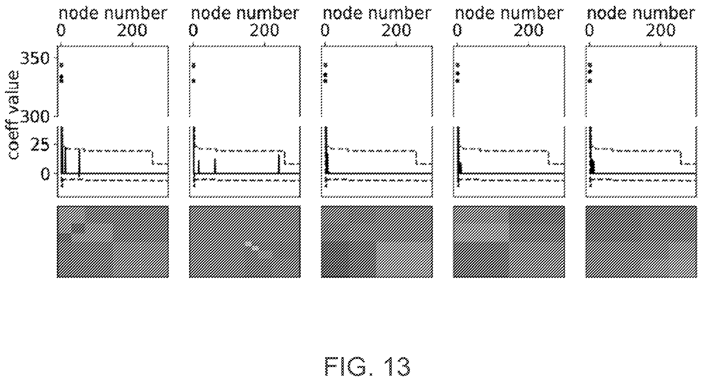

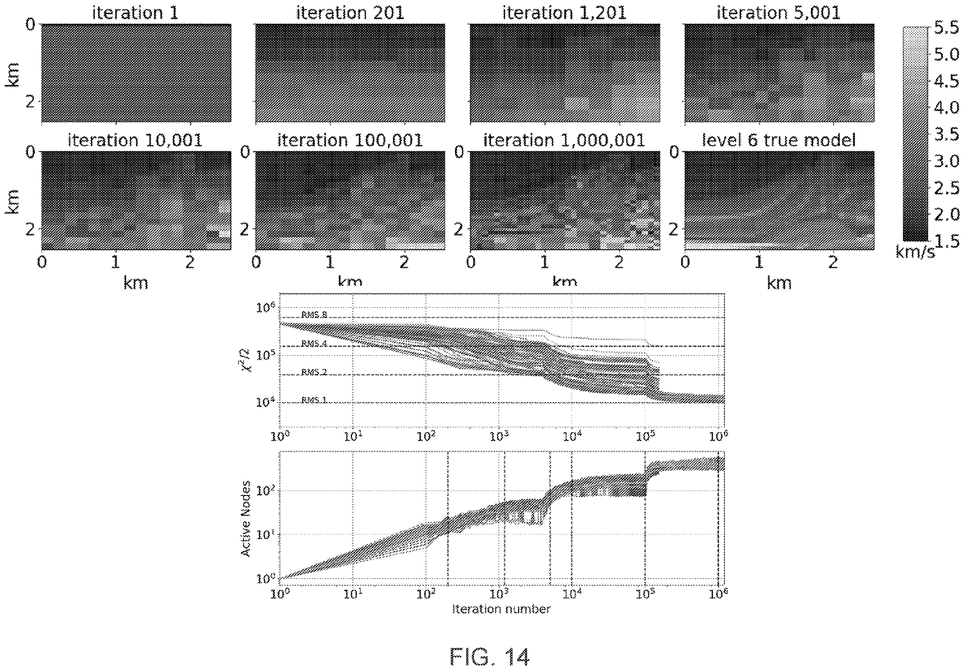

Similar to the previous embodiment, prior bounds were obtained by finding the minimum and maximum DWT coefficients at each level, and going above and below these bounds by 2 percent of the value. Fig. 13 shows a few 5-node realizations from the prior. We used the Haar basis set for this example, as the smooth CDF 9/7 basis did not work satisfactorily in our trials-we conjecture this was because reflections required sharper edges than the CDF wavelet coefficients at lower levels were able to provide. Bayesian parsimony will not encourage the sampling of more complicated trees if misfit is not substantially reduced by the addition of more active nodes. With the Haar basis, we obtained quick convergence to models resembling the background velocity from within 200 to 10,000 models (RMS 2.3 to 1.44) depending on the notion of an 'acceptable misfit'. We should mention here that a naive implementation of Gauss-Newton with water velocity fixed to the true value and a constant background velocity of 2.6 km s$^{-1}$ was simply not able to provide an update. The progress of sampling and models sampled in the target chain ($\tau = 1$) at select iterations is shown in Fig. 14. 80 parallel tempering McMC chains were used initially with log-spaced temperatures between 1 and 5. After 200,000 iterations we were reasonably confident that local minima (likelihood maxima) had been escaped, and only the first 40 chains (temperatures from 1 to 2.213) were used to sample the posterior model PDF. The misfit level asymptoted to RMS 2.0 after 1000 iterations, with the allowed tree depth maximum set to level 4 (64 maximum nodes). After the algorithm was allowed to access level 5 (256 active nodes maximum) the misfit asymptoted again at about an RMS of 1.37, close to the expected value of 1. However, the number of nodes sampled was close to 256, and it was evident that if RMS 1.0 was to be reached, at least the next depth level had to be made available to the algorithm. When level 6 with 1024 maximum nodes was made accessible to the models, an RMS very close to 1 was reached around 200,000 iterations. Sampling was then allowed to go on for another 1 million iterations, and no model required more than 468 active nodes.

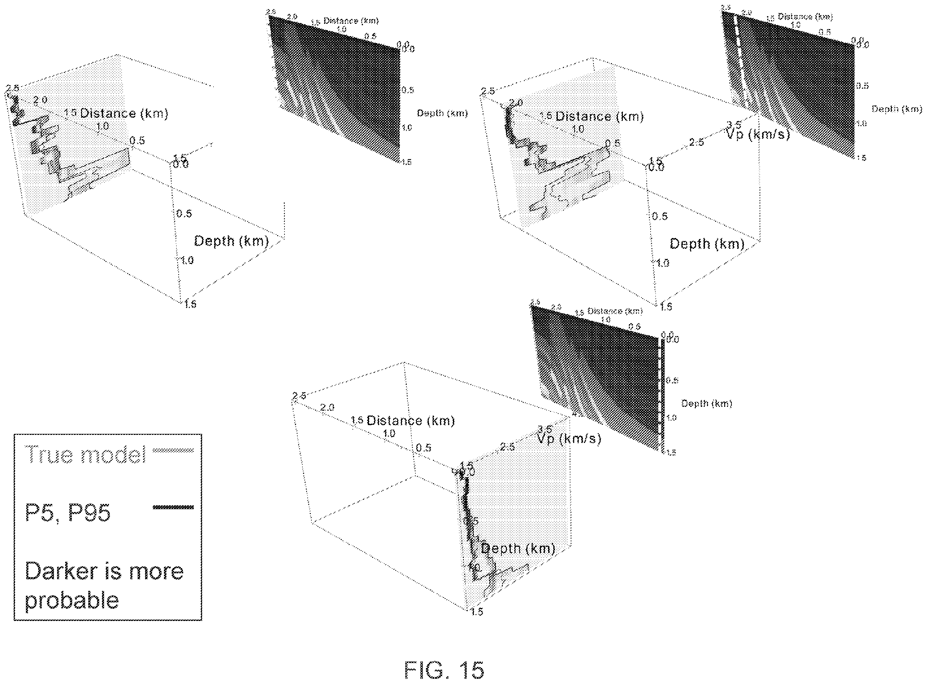

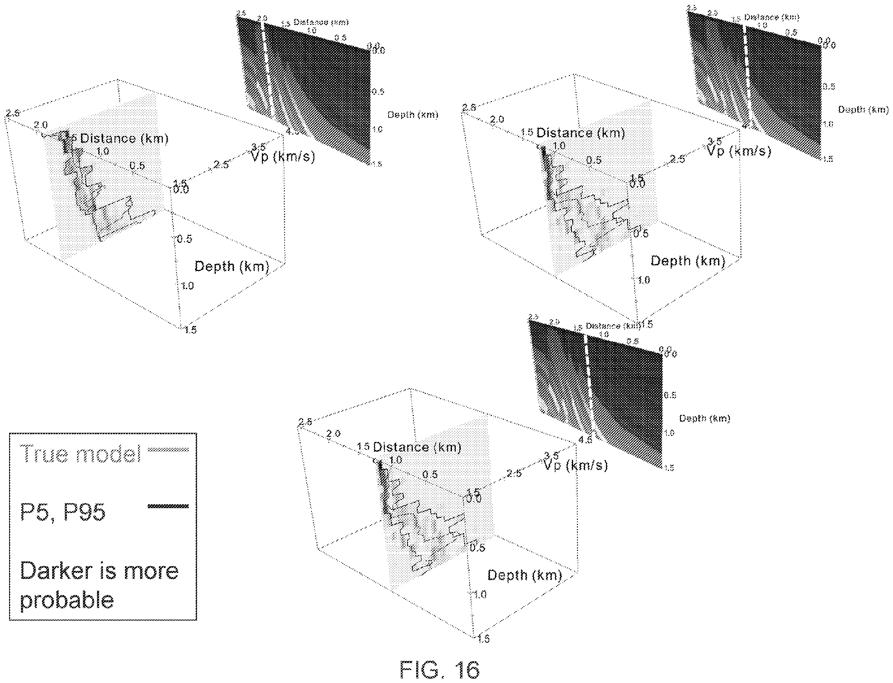

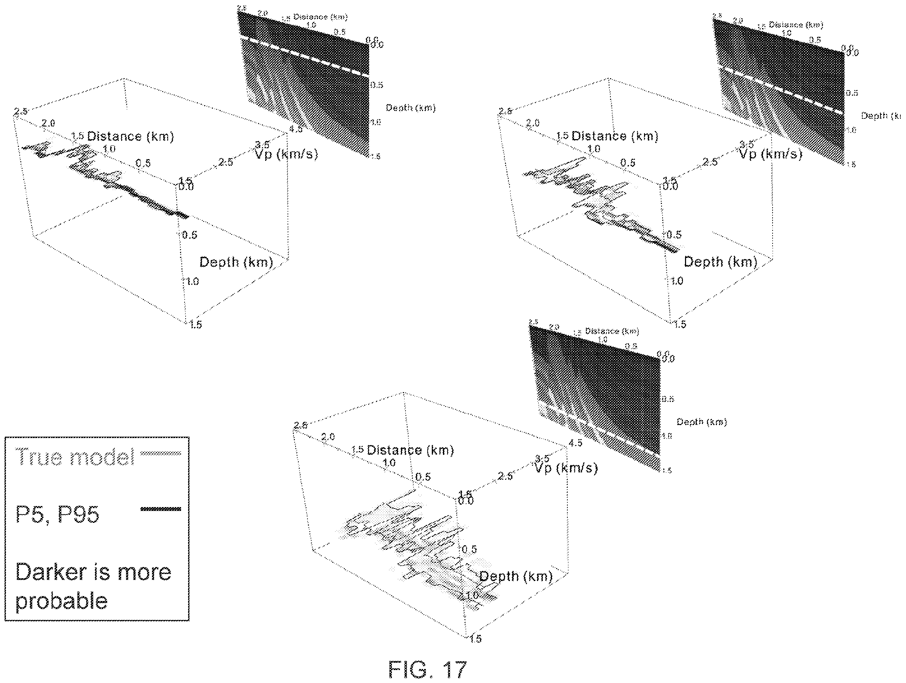

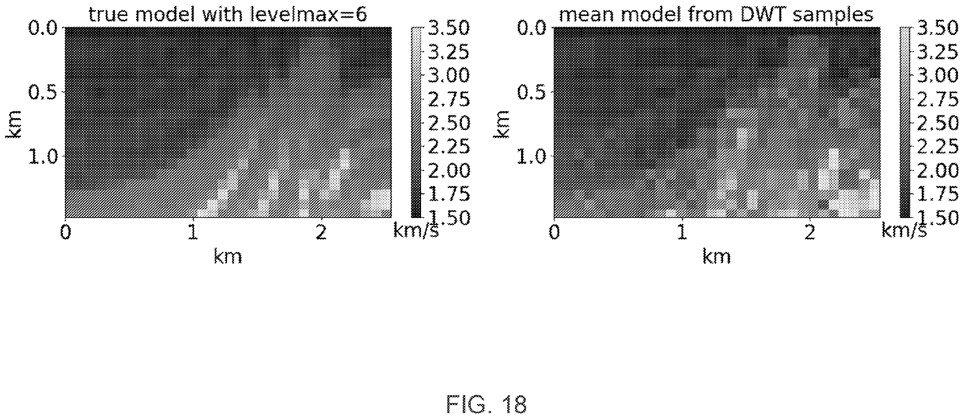

For posterior inference, we used only the last 700,000 iterations to obtain samples from a stationary Markov chain unbiased by poorly fitting models. Only the target chain was used for posterior inference. Similar to the previous example, we can create probability cubes with marginal PDFs of velocity at every subsurface location, and the results are shown in Figs 15-17. Again, in the left column, darker colors are representative of higher probability of velocity at a particular point in the cube. The true velocity profile is shown with a red line, and the 90 per cent credible interval at every depth is between the two black lines. The best velocity resolution appears to be near the illumination sources (Fig. 15), getting worse towards the center (Fig. 16). As expected, resolution is better shallower (Fig. 17). Beyond 1.5 km depth, the PDFs of velocity are too diffuse to provide meaningful information. It is heartening that in most cases, the true velocity lies within the 5 per cent and 95 per cent credible intervals and velocity changes can be inferred when the PDFs of velocity change *en masse* with distance and depth. The picture of resolution which emerges a posteriori is consistent with the acquisition setup with two shots at the edges, surface recording and the high levels of noise. We should note that the sampled posterior models parameterize adaptively to provide this picture of resolution-resulting in fine detail only where the data are able to provide it. We can also provide posterior statistics such as the mean (Fig. 18) and quantile velocities at every pixel, but displays of the marginal posterior PDF of velocity (Figs 15-17) with depth are more useful, in our opinion. All of these results may be presented to the user via a user interface including a graphical user interface (GUI).

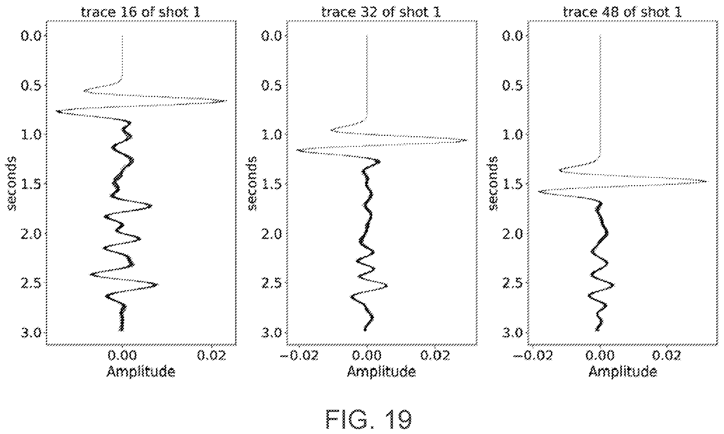

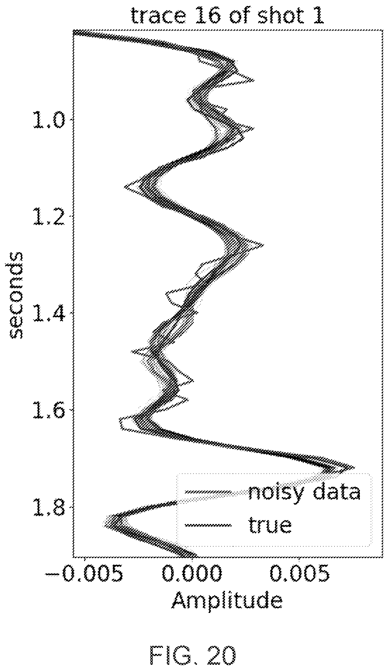

An important check after any inversion is an examination of the data fit and residuals. With real data, correlated residuals are indicative of theory error, an incorrect likelihood function, coherent noise, or some combination of the above. These cannot be always be avoided, but residuals can tell us how much an inversion can be trusted-for example, in Ray et al. (2016) it was expected that the residuals would be correlated (due to processing/acquisition artefacts) but Gaussian, and indeed they were. For the synthetic examples herein, we added uncorrelated Gaussian random noise and expect that our residuals should therefore also be uncorrelated and Gaussian. For our reflection experiment, we selected 100 random models from the posterior PDF and forward calculated the shot gathers. We have plotted all 100 modelled responses at select traces as shown in Fig. 19. Zooming into one of the traces as shown in Fig. 20, we can see how the added Gaussian noise has allowed for a spread of allowable model responses and hence contributed to uncertainty in inverted velocity.

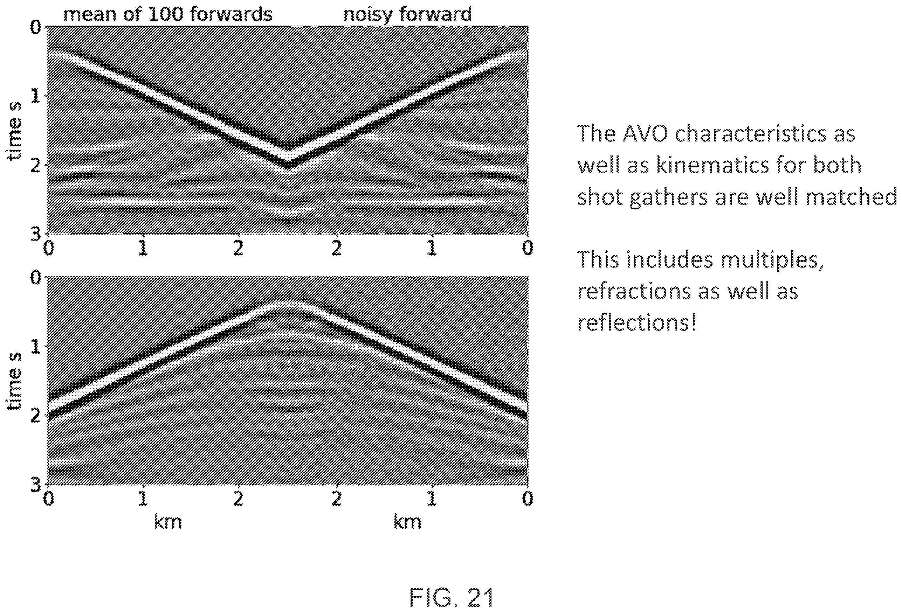

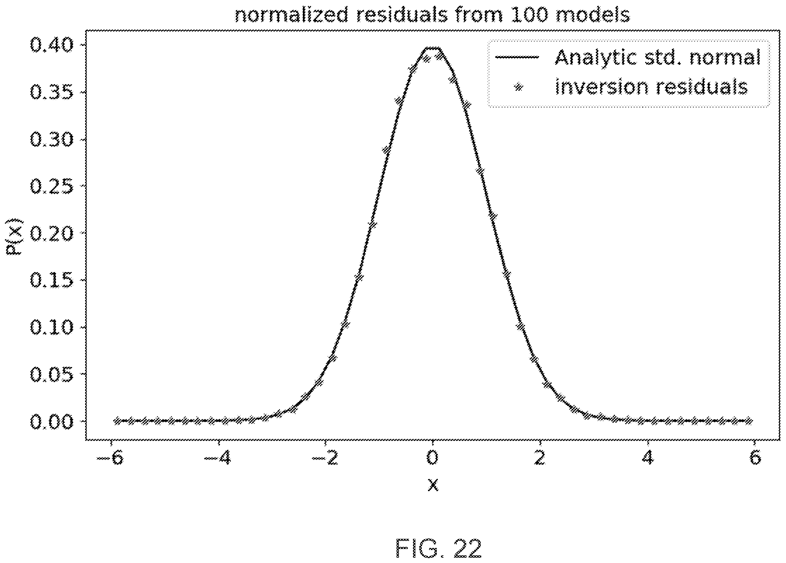

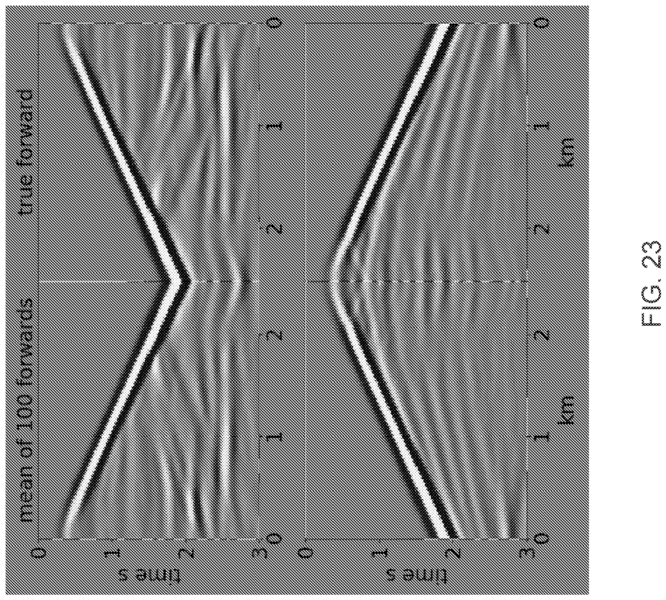

We can examine the data fit for 100 random posterior models for both shots, as shown in Fig. 21. On the left-hand side is the mean seismic response calculated by summing the posterior model responses for each shot. On the right, is the noisy synthetic data. One can see that the mean of the model responses is remarkably similar to the observed data. All major events and their amplitude versus offset (AVO) characteristics, multiples and refractions have for the most part been well reproduced. The normalized inversion residuals for all time samples, for both shots, for the same 100 random models from the posterior ensemble are shown in Fig. 22. This is further proof that the sampling / inversion is working as intended. We had assumed a Gaussian likelihood, and the sampled models have not overfit the data, producing residuals which when normalized by their standard deviation, approximate an analytic standard normal PDF. We can also compare the mean of the model responses with the true, noiseless synthetic data as shown in Fig. 23.

We have demonstrated with two synthetic examples, the feasibility of carrying out a fully nonlinear, 2-D Bayesian inversion with adaptive model complexity in a tree based framework. There are numerous advantages to doing this, chief among them being an easy to use parametrization which works equally well across 1-D, 2-D and 3-D earth models. Using the tree based parametrization, we easily obtain acceptance rates for birth and death as high as 25 per cent, ensuring good mixing of the McMC, which is very difficult with a Voronoi cell parameterization (Hawkins & Sambridge 2015). Specifying prior coefficient bounds as we have done here, restricts prior models to being within only a certain range of feasible models, while not being an overly restrictive constraint. The use of Parallel Tempering enables us to escape local misfit minima, a major hindrance for reflection based FWI. Finally, the DWT provides an easy means of switching to the model basis most appropriate for solving the current problem. Of course, there is an inherent subjectivity in the use of Bayesian priors and different basis functions (Hawkins & Sambridge 2015). However, for practical purposes, almost all geophysical inversion via optimization takes advantage of sensible constraints. Bayesian inversion methods as demonstrated here are naturally able to incorporate multiple structural constraints as prior information. While it is undoubtedly true that a Bayesian appraisal is more time consuming than optimization, fast methods to speed up sampling by an order of magnitude are being researched actively in both the geophysics and particularly the statistics communities, coupled with increasingly easy availability of parallel computing from commercial vendors. In this context, our analysis can be extended to higher frequencies and more shots. The fact that a Bayesian inversion of geophysical data provides an uncertainty analysis is invaluable, as it can be a risk mitigation factor for many decisions informed by geophysical data.

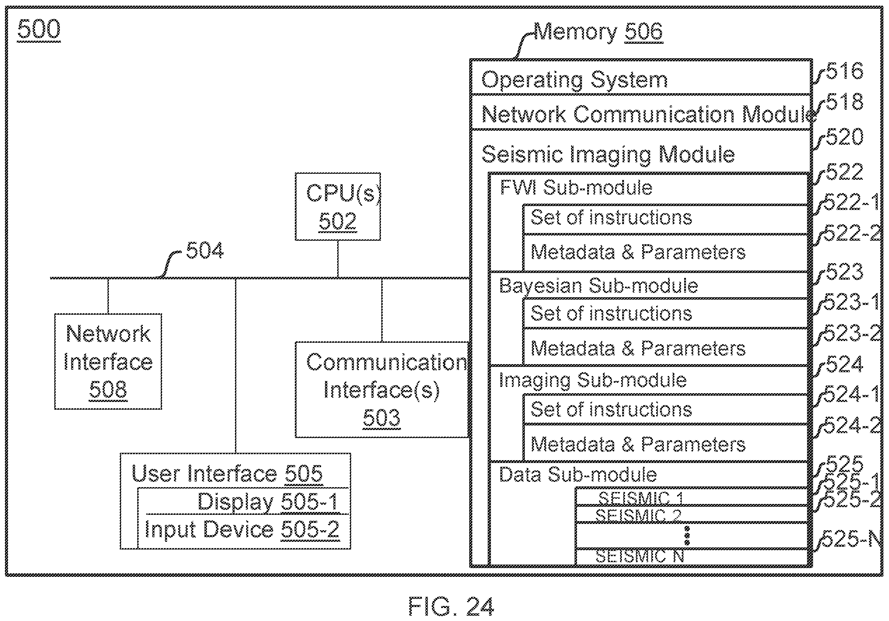

Figure 24 is a block diagram illustrating a seismic imaging system 500, in accordance with some embodiments. While certain specific features are illustrated, those skilled in the art will appreciate from the present disclosure that various other features have not been illustrated for the sake of brevity and so as not to obscure more pertinent aspects of the embodiments disclosed herein.

To that end, the seismic imaging system 500 includes one or more processing units (CPUs) 502, one or more network interfaces 508 and/or other communications interfaces 503, memory 506, and one or more communication buses 504 for interconnecting these and various other components. The seismic imaging system 500 also includes a user interface 505 (e.g., a display 505-1 and an input device 505-2). The communication buses 504 may include circuitry (sometimes called a chipset) that interconnects and controls communications between system components. Memory 506 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 506 may optionally include one or more storage devices remotely located from the CPUs 502. Memory 506, including the non-volatile and volatile memory devices within memory 506, comprises a non-transitory computer readable storage medium and may store seismic data, velocity models, seismic images, and/or geologic structure information.

In some embodiments, memory 506 or the non-transitory computer readable storage medium of memory 506 stores the following programs, modules and data structures, or a subset thereof including an operating system 516, a network communication module 518, and a seismic imaging module 520.

The operating system 516 includes procedures for handling various basic system services and for performing hardware dependent tasks.

The network communication module 518 facilitates communication with other devices via the communication network interfaces 508 (wired or wireless) and one or more communication networks, such as the Internet, other wide area networks, local area networks, metropolitan area networks, and so on.

In some embodiments, the seismic imaging module 520 executes the operations of the seismic imaging method including the FWI using the tree-based Bayesian approach. Seismic imaging module 520 may include data sub-module 525, which handles the seismic dataset including seismic gathers 525-1 through 525-N. This seismic data is supplied by data sub-module 525 to other sub-modules.

FWI sub-module 522 contains a set of instructions 522-1 and accepts metadata and parameters 522-2 that will enable it to execute operations for full waveform inversion. The Bayesian sub-module 523 contains a set of instructions 523-1 and accepts metadata and parameters 523-2 that will enable it to perform the tree-based Bayesian approach for the FWI method. The imaging sub-module 524 contains a set of instructions 524-1 and accepts metadata and parameters 524-2 that will enable it to execute seismic imaging using the velocities determined by FWI sub-module 522 and Bayesian sub-module 523. Although specific operations have been identified for the sub-modules discussed herein, this is not meant to be limiting. Each sub-module may be configured to execute operations identified as being a part of other sub-modules, and may contain other instructions, metadata, and parameters that allow it to execute other operations of use in processing seismic data and generate the seismic image. For example, any of the sub-modules may optionally be able to generate a display that would be sent to and shown on the user interface display 505-1. In addition, any of the seismic data or processed seismic data products may be transmitted via the communication interface(s) 503 or the network interface 508 and may be stored in memory 506.

Method 100 is, optionally, governed by instructions that are stored in computer memory or a non-transitory computer readable storage medium (e.g., memory 506 in Figure 24) and are executed by one or more processors (e.g., processors 502) of one or more computer systems. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, method 100 is described as being performed by a computer system, although in some embodiments, various operations of method 100 are distributed across separate computer systems.

While particular embodiments are described above, it will be understood it is not intended to limit the invention to these particular embodiments. It should be understood that various changes, substitutions, and alterations could be made hereto without departing from the scope of the invention, as defined by the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Claims**

1. A method of hydrocarbon exploration, comprising:

   a. receiving, at a computer processor (502), a seismic dataset representative of a subsurface volume of interest and a prior model specification;
   b. performing, via the computer processor (502), full waveform inversion of the seismic dataset, which generates an ensemble of sampled earth models that adapt to the spatial resolution of the seismic dataset;
   c. generating, via the computer processor (502), an ensemble of seismic images from the seismic data and the ensemble of sampled earth models;
   d. performing an uncertainty analysis, via the computer processor, of the ensemble of seismic images using the ensemble of sampled earth models and the seismic data;
   e. using the ensemble of seismic images, the ensemble of sampled earth models, and the uncertainty analysis to appraise the subsurface volume of interest and determine locations to drill wells and produce hydrocarbons from the subsurface volume of interest, the method being **characterized in that**:

   the full waveform inversion uses a tree-based Bayesian sampling approach, which uses the prior model specification in reduced dimensions, and automatically adapts model complexity;
   the full waveform inversion uses a reduced model basis on a tree structure for model compression;
   the reduced model basis and the model compression use discrete wavelet transforms, DWT; and
   prior coefficient bounds are specified by finding minimum and maximum DWT coefficients at each level of the tree, and the bounds for coefficients at each level are set to be above and below the minimum and maximum in order to restrict prior models to being within only a given range of feasible models.

2. The method of claim 1 wherein the full waveform inversion uses a Reversible Jump Markov chain Monte Carlo, RJ-McMC, method.

3. The method of claim 1 wherein the full waveform inversion uses parallel tempering to escape local minima.

4. The method of claim 1 wherein the method automatically selects and operates with a limited set of DWT coefficients of the velocity model.

5. The method of claim 1 wherein each earth model in the ensemble of sampled earth models includes one or more of P-wave velocities $V_p$, shear wave velocities $V_s$, and density $\rho$.

6. The method of claim 1 wherein:
   the tree structure comprises levels of nodes where a first level corresponds to the root node of the tree.

7. The method of claim 1 or 6 wherein:
   the bounds at each level are 2 percent less than as well as greater than the minimum and maximum DWT coefficients for that level.

8. A computer system (500), comprising:

   one or more processors (502); and
   memory (506), and
   wherein one or more programs are stored in the memory (506) and configured to be executed by the one or more processors (502), the one or more programs including instructions that, when executed by the one or more processors (502), cause the computer system (500) to:

   receive, at the one or more processors (502), a seismic dataset representative of a subsurface volume of interest and a prior model specification;
   perform, via the one or more processors (502), full waveform inversion of the seismic dataset, which an ensemble of sampled earth models that adapt to the spatial resolution of the seismic dataset;
   generate, via the one or more processors (502), an ensemble of seismic images from the seismic data and the ensemble of sampled earth models;
   perform an uncertainty analysis, via the one or more processors (502), of the ensemble of seismic images using the ensemble of sampled earth models and the seismic data; and
   display, on a user interface (505), at least one of the ensemble of seismic images, the ensemble of sampled earth models, and the uncertainty analysis to allow appraisal of the subsurface volume of interest and determine locations to drill wells and produce hydrocarbons from the subsurface volume of interest,
   **characterized in that**:

   the full waveform inversion uses a tree-based Bayesian sampling approach, which uses the prior model specification in reduced dimensions, and automatically adapts model complexity;
   the full waveform inversion uses a reduced model basis on a tree structure for model compression;
   the reduced model basis and the model compression use discrete wavelet transforms, DWT; and
   prior coefficient bounds are specified by finding minimum and maximum DWT coefficients at each level of the tree, and the bounds for coefficients at each level are set to be above and below the minimum and maximum in order to restrict prior models to being within only a given range of feasible models.

9. One or more programs comprising instructions which, when executed by an electronic device (500) with one or more processors (502) and memory (506), cause the device (500) to:

   receive, at the one or more processors (502), a seismic dataset representative of a subsurface volume of interest and a prior model specification;
   perform, via the one or more processors (502), full waveform inversion of the seismic dataset, which generates an ensemble of sampled earth models that adapt to the spatial resolution of the seismic dataset;
   generate, via the one or more processors (502), an ensemble of seismic images from the seismic data and the ensemble of sampled earth models;
   perform an uncertainty analysis, via the one or more processors (502), of the ensemble of seismic images using the ensemble of sampled earth models and the seismic data; and
   display, on a user interface (505), at least one of the ensemble of seismic images, the ensemble of sampled earth models, and the uncertainty analysis to allow appraisal of the subsurface volume of interest and determine locations to drill wells and produce hydrocarbons from the subsurface volume of interest,
   **characterized in that**:

   the full waveform inversion uses a tree-based Bayesian sampling approach, which uses the prior model specification in reduced dimensions, and automatically adapts model complexity;
   the full waveform inversion uses a reduced model basis on a tree structure for model compression;

the reduced model basis and the model compression use discrete wavelet transforms, DWT; and
prior coefficient bounds are specified by finding minimum and maximum DWT coefficients at each level of the tree, and the bounds for coefficients at each level are set to be above and below the minimum and maximum in order to restrict prior models to being within only a given range of feasible models.

**10.** A non-transitory computer readable storage medium having the one or more programs of claim 9 stored thereon.

**Patentansprüche**

**1.** Verfahren zur Kohlenwasserstoffförderung, umfassend

a. Empfangen, an einem Rechnerprozessor (502), eines seismischen Datensatzes, der ein unterirdisches Volumen von Interesse und eine frühere Modellspezifikation darstellt;
b. Durchführen, über den Rechnerprozessor (502), einer vollständigen Wellenforminversion des seismischen Datensatzes, die einen Formenschatz abgefragter Erdmodelle erzeugt, die sich an die räumliche Auflösung des seismischen Datensatzes anpassen;
c. Erzeugen, über den Rechnerprozessor (502), eines Formenschatzes seismischer Bilder aus den seismischen Daten und dem Formenschatz abgefragter Erdmodelle;
d. Durchführen einer Unsicherheitsanalyse, über den Rechnerprozessor, des Formenschatzes seismischer Bilder mit Hilfe des Formenschatzes abgefragter Erdmodelle und der seismischen Daten;
e. Verwenden des Formenschatzes seismischer Bilder, des Formenschatzes abgefragter Erdmodelle und der Unsicherheitsanalyse, zum Bewerten des unterirdischen Volumens von Interesse und zum Bestimmen von Standorten, um Bohrlöcher zu bohren und Kohlenwasserstoffe aus dem unterirdischen Volumen von Interesse zu fördern,

wobei das Verfahren **dadurch gekennzeichnet ist, dass**

die vollständige Wellenforminversion einen baumbasierten Bayesschen Probenansatz verwendet, der die vorherige Modellspezifikation in reduzierten Dimensionen verwendet, und die Modellkomplexität automatisch anpasst;
die vollständige Wellenforminversion eine reduzierte Modellbasis auf einer Baumstruktur zur Modellkompression verwendet;
die reduzierte Modellbasis und die Modellkompression diskrete Wavelet-Transformationen, DWT, verwenden; und
vorherige Koeffizientengrenzen spezifiziert werden, indem minimale und maximale DWT-Koeffizienten auf jeder Ebene des Baums gefunden werden, und die Koeffizientengrenzen auf jeder Ebene so festgelegt werden, dass sie über und unter dem Minimum und Maximum liegen, um frühere Modelle darauf zu beschränken, dass sie nur innerhalb einer gegebenen Reihe von praktikablen Modellen liegen.

**2.** Verfahren gemäß Anspruch 1, wobei die vollständige Wellenforminversion ein Umkehrsprung-Markov-Monte-Carlo-Kettenverfahren, RJ-McMC, verwendet.

**3.** Verfahren gemäß Anspruch 1, wobei die vollständige Wellenforminversion paralleles Tempern verwendet, um lokalen Minima zu entkommen.

**4.** Verfahren gemäß Anspruch 1, wobei das Verfahren automatisch einen begrenzten Satz von DWT-Koeffizienten des Geschwindigkeitsmodells auswählt und damit arbeitet.

**5.** Verfahren gemäß Anspruch 1, wobei jedes Erdmodell im Formenschatz abgefragter Erdmodelle eine oder mehrere aus P-Wellengeschwindigkeiten $V_p$, Scherwellengeschwindigkeiten $V_s$ und Dichte $\rho$ enthält.

**6.** Verfahren gemäß Anspruch 1, wobei
die Baumstruktur Knotenebenen umfasst, in denen eine erste Ebene dem Wurzelknoten des Baums entspricht.

**7.** Verfahren gemäß Anspruch 1 oder 6, wobei
die Grenzen auf jeder Ebene 2 Prozent kleiner und größer sind als die minimalen und maximalen DWT-Koeffizienten für diese Ebene.

8. Rechnersystem (500), umfassend

einen oder mehrere Prozessoren (502); und
Speicher (506), und
wobei ein oder mehrere Programme im Speicher (506) abgelegt sind und ausgelegt, von dem einen oder den mehreren Prozessoren (502) ausgeführt zu werden, wobei das eine oder die mehreren Programme Anweisungen enthalten, die, werden sie von dem einen oder den mehreren Prozessoren (502) ausgeführt, das Rechnersystem (500) dazu veranlassen,

an dem einen oder den mehreren Prozessoren (502) einen seismischen Datensatz, der ein unterirdisches Volumen von Interesse darstellt, und eine frühere Modellspezifikation zu empfangen;
über den einen oder die mehreren Prozessoren (502) eine vollständige Wellenforminversion des seismischen Datensatzes durchzuführen, die einen Formenschatz abgefragter Erdmodelle erzeugt, die sich an die räumliche Auflösung des seismischen Datensatzes anpassen;
über den einen oder die mehreren Prozessoren (502) einen Formenschatz seismischer Bilder aus den seismischen Daten und dem Formenschatz abgefragter Erdmodelle zu erzeugen;
über den einen oder die mehreren Prozessoren (502), eine Unsicherheitsanalyse, des Formenschatzes seismischer Bilder mit Hilfe des Formenschatzes abgefragter Erdmodelle und der seismischen Daten durchzuführen; und
auf einer Benutzerschnittstelle (505) mindestens eines aus dem Formenschatz seismischer Bilder, dem Formenschatz abgefragter Erdmodelle und der Unsicherheitsanalyse anzuzeigen, um eine Bewertung des unterirdischen Volumens von Interesse zu ermöglichen und Orte zu bestimmen, an denen Bohrlöcher gebohrt und Kohlenwasserstoffe aus dem unterirdische Volumen von Interesse gefördert werden können,
**dadurch gekennzeichnet, dass**
die vollständige Wellenforminversion einen baumbasierten Bayesschen Probenansatz verwendet, der die vorherige Modellspezifikation in reduzierten Dimensionen verwendet, und die Modellkomplexität automatisch anpasst;
die vollständige Wellenforminversion eine reduzierte Modellbasis auf einer Baumstruktur zur Modellkompression verwendet;
die reduzierte Modellbasis und die Modellkompression diskrete Wavelet-Transformationen, DWT, verwenden; und
vorherige Koeffizientengrenzen spezifiziert werden, indem minimale und maximale DWT-Koeffizienten auf jeder Ebene des Baums gefunden werden, und die Koeffizientengrenzen auf jeder Ebene so festgelegt werden, dass sie über und unter dem Minimum und Maximum liegen, um frühere Modelle darauf zu beschränken, dass sie nur innerhalb einer gegebenen Reihe von praktikablen Modellen liegen.

9. Ein oder mehrere Programme, die Anweisungen umfassen, die werden sie von einem elektronischen Gerät (500) mit einem oder mehreren Prozessoren (502) und Speicher (506) ausgeführt, das Gerät (500) dazu veranlassen,

an dem einen oder den mehreren Prozessoren (502) einen seismischen Datensatz, der ein unterirdisches Volumen von Interesse darstellt, und eine frühere Modellspezifikation zu empfangen;
über den einen oder die mehreren Prozessoren (502) eine vollständige Wellenforminversion des seismischen Datensatzes durchzuführen, die einen Formenschatz abgefragter Erdmodelle erzeugt, die sich an die räumliche Auflösung des seismischen Datensatzes anpassen;
über den einen oder die mehreren Prozessoren (502) einen Formenschatz seismischer Bilder aus den seismischen Daten und dem Formenschatz abgefragter Erdmodelle zu erzeugen;
über den einen oder die mehreren Prozessoren (502), eine Unsicherheitsanalyse, des Formenschatzes seismischer Bilder mit Hilfe des Formenschatzes abgefragter Erdmodelle und der seismischen Daten durchzuführen; und
auf einer Benutzerschnittstelle (505) mindestens eines aus dem Formenschatz seismischer Bilder, dem Formenschatz abgefragter Erdmodelle und der Unsicherheitsanalyse anzuzeigen, um eine Bewertung des unterirdischen Volumens von Interesse zu ermöglichen und Orte zu bestimmen, an denen Bohrlöcher gebohrt und Kohlenwasserstoffe aus dem unterirdische Volumen von Interesse gefördert werden können,
**dadurch gekennzeichnet, dass**
die vollständige Wellenforminversion einen baumbasierten Bayesschen Probenansatz verwendet, der die vorherige Modellspezifikation in reduzierten Dimensionen verwendet, und die Modellkomplexität automatisch anpasst;
die vollständige Wellenforminversion eine reduzierte Modellbasis auf einer Baumstruktur zur Modellkompression verwendet;

die reduzierte Modellbasis und die Modellkompression diskrete Wavelet-Transformationen, DWT, verwenden; und

vorherige Koeffizientengrenzen spezifiziert werden, indem minimale und maximale DWT-Koeffizienten auf jeder Ebene des Baums gefunden werden, und die Koeffizientengrenzen auf jeder Ebene so festgelegt werden, dass sie über und unter dem Minimum und Maximum liegen, um frühere Modelle darauf zu beschränken, dass sie nur innerhalb einer gegebenen Reihe von praktikablen Modellen liegen.

10. Nichtflüchtiges rechnerlesbares Speichermedium, mit dem einen oder den mehreren Programmen aus Anspruch 9 darauf gespeichert.

**Revendications**

1. Procédé d'exploration d'hydrocarbures, comprenant :

   a. recevoir, au niveau d'un processeur d'ordinateur (502), un jeu de données sismiques représentatif d'un volume souterrain d'intérêt et une spécification de modèle antérieure ;
   b. effectuer, via le processeur informatique (502), une inversion de forme d'onde complète du jeu de données sismiques, qui génère un ensemble de modèles terrestres échantillonnés qui s'adaptent à la résolution spatiale du jeu de données sismiques ;
   c. générer, via le processeur informatique (502), un ensemble d'images sismiques à partir des données sismiques et de l'ensemble des modèles terrestres échantillonnés ;
   d. effectuer une analyse d'incertitude, via le processeur informatique, de l'ensemble d'images sismiques en utilisant l'ensemble des modèles terrestres échantillonnés et des données sismiques ;
   e. utiliser l'ensemble d'images sismiques, l'ensemble de modèles terrestres échantillonnés et l'analyse d'incertitude pour évaluer le volume souterrain d'intérêt et déterminer des emplacements pour forer des puits et produire des hydrocarbures à partir du volume souterrain d'intérêt,

   le procédé étant **caractérisé en ce que** :

   l'inversion complète de la forme d'onde utilise une approche d'échantillonnage bayésienne basée sur un arbre, qui utilise la spécification de modèle antérieure dans des dimensions réduites, et adapte automatiquement la complexité du modèle ;
   l'inversion de forme d'onde complète utilise une base de modèle réduite sur une structure d'arbre pour la compression de modèle ;
   la base de modèle réduite et la compression de modèle utilisent des transformées en ondelettes discrètes, DWT ; et
   les limites des coefficients antérieurs sont spécifiées en trouvant les coefficients DWT minimum et maximum à chaque niveau de l'arbre, et les limites des coefficients à chaque niveau sont définies pour être au-dessus et en-dessous du minimum et du maximum afin de restreindre les modèles antérieurs à seulement une donnée gamme de modèles réalisables.

2. Procédé selon la revendication 1, dans lequel l'inversion de forme d'onde complète utilise une méthode de chaîne de Markov à saut réversible Monte Carlo, RJ-McMC.

3. Procédé selon la revendication 1, dans lequel l'inversion de forme d'onde complète utilise une trempe parallèle pour échapper aux minima locaux.

4. Procédé selon la revendication 1, dans lequel le procédé sélectionne et fonctionne automatiquement avec un ensemble limité de coefficients DWT du modèle de vitesse.

5. Procédé selon la revendication 1, dans lequel chaque modèle terrestre dans l'ensemble des modèles terrestres échantillonnés comprend une ou plusieurs parmi vitesses d'onde P $V_p$, vitesses d'onde de cisaillement $V_s$ et densité $\rho$.

6. Procédé selon la revendication 1, dans lequel la structure d'arbre comprend des niveaux de noeuds où un premier niveau correspond au noeud racine de l'arbre.

7. Procédé selon la revendication 1 ou 6, dans lequel les limites à chaque niveau sont de 2 % inférieures et supérieures aux coefficients DWT minimum et maximum pour ce niveau.

8. Système informatique (500), comprenant :

un ou plusieurs processeurs (502) ; et
mémoire (506), et
dans lequel un ou plusieurs logiciels sont stockés dans la mémoire (506) et configurés pour être exécutés par le ou les processeurs (502), le ou les logiciels comprenant des instructions qui, lorsqu'elles sont exécutées par le ou les processeurs (502), provoquent le système informatique (500) pour :

recevoir, au niveau du ou des processeurs (502), un jeu de données sismiques représentatif d'un volume souterrain d'intérêt et une spécification de modèle antérieure ;
effectuer, via le ou les processeurs (502), une inversion de forme d'onde complète du jeu de données sismiques, qui génère un ensemble de modèles terrestres échantillonnés qui s'adaptent à la résolution spatiale du jeu de données sismiques ;
générer, via le ou les processeurs (502), un ensemble d'images sismiques à partir des données sismiques et de l'ensemble des modèles terrestres échantillonnés ;
effectuer une analyse d'incertitude, via le ou les processeurs (502), de l'ensemble d'images sismiques en utilisant l'ensemble de modèles terrestres échantillonnés et les données sismiques ; et
afficher, sur une interface utilisateur (505), au moins l'un de l'ensemble d'images sismiques, l'ensemble des modèles de terre échantillonnés, et l'analyse d'incertitude pour permettre l'évaluation du volume souterrain d'intérêt et déterminer les emplacements pour forer des puits et produire des hydrocarbures à partir le volume souterrain d'intérêt,
**caractérisé en ce que** :

l'inversion complète de la forme d'onde utilise une approche d'échantillonnage bayésienne basée sur un arbre qui utilise la spécification de modèle antérieure dans des dimensions réduites, et adapte automatiquement la complexité du modèle ;
l'inversion de forme d'onde complète utilise une base de modèle réduite sur une structure d'arbre pour la compression de modèle ;
la base de modèle réduite et la compression de modèle utilisent des transformées en ondelettes discrètes DWT ; et
les limites des coefficients antérieurs sont spécifiées en trouvant les coefficients DWT minimum et maximum à chaque niveau de l'arbre, et les limites des coefficients doivent être fixés à chaque niveau au-dessus et en-dessous du minimum et du maximum afin de restreindre les modèles antérieurs à n'être compris qu'à l'intérieur d'une plage donnée de possibilités des modèles.

9. Un ou plusieurs logiciels comprenant des instructions qui, lorsqu'elles sont exécutées par un dispositif électronique (500) avec un ou plusieurs processeurs (502) et une mémoire (506), amènent le dispositif (500) à :

recevoir, au niveau du ou des processeurs (502), un jeu de données sismiques représentatif d'un volume souterrain d'intérêt et une spécification de modèle antérieure ;
effectuer, via le ou les processeurs (502), une inversion de forme d'onde complète du jeu de données sismiques, qui génère un ensemble de modèles terrestres échantillonnés qui s'adaptent à la résolution spatiale du jeu de données sismiques ;
générer, via le ou les processeurs (502), un ensemble d'images sismiques à partir des données sismiques et de l'ensemble des modèles terrestres échantillonnés ;
effectuer une analyse d'incertitude, via le ou les processeurs (502), de l'ensemble d'images sismiques en utilisant l'ensemble de modèles terrestres échantillonnés et les données sismiques ; et
afficher, sur une interface utilisateur (505), au moins l'un de l'ensemble d'images sismiques, l'ensemble des modèles de terre échantillonnés, et l'analyse d'incertitude pour permettre l'évaluation du volume souterrain d'intérêt et déterminer les emplacements pour forer des puits et produire des hydrocarbures à partir le volume souterrain d'intérêt,
**caractérisé en ce que** :

l'inversion complète de la forme d'onde utilise une approche d'échantillonnage bayésienne basée sur un arbre qui utilise la spécification de modèle antérieure dans des dimensions réduites, et adapte automatiquement la complexité du modèle ;

l'inversion de forme d'onde complète utilise une base de modèle réduite sur une structure d'arbre pour la compression de modèle ;

la base de modèle réduite et la compression de modèle utilisent des transformées en ondelettes discrètes DWT ; et

les limites des coefficients antérieurs sont spécifiées en trouvant les coefficients DWT minimum et maximum à chaque niveau de l'arbre, et les limites des coefficients doivent être fixés à chaque niveau au-dessus et en-dessous du minimum et du maximum afin de restreindre les modèles antérieurs à n'être compris qu'à l'intérieur d'une plage donnée de possibilités des modèles.

10. Support de stockage non transitoire lisible par ordinateur sur lequel le ou les logiciels de la revendication 9 sont stockés.

FIG. 2

FIG. 1

Active set $S_v$ = {1,3}
Birth set $S_b$ = {2,9,10,11,12,4}
Death set $S_d$ = {3}

FIG. 3

EP 3 649 490 B1

FIG. 4

FIG. 5

EP 3 649 490 B1

FIG. 6

FIG. 7

FIG. 8

FIG. 9

True model —

Darker colors
are more
probable

FIG. 10

Level 4 (blue) vs Level 5 PDFs (red) at slice 80

The level 5 PDF, though more wiggly, gives a "truer" picture of uncertainty.

Velocity thickness trade-offs can be seen!

FIG. 11

A 2-shot surface reflection experiment on a scaled version of the Marmousi model.

Besides the free surface, all multiples have been modeled.

Dx = 20 m
Dz = 20 m
Wavelet = Ricker (f0 = 3.75 Hz)

FIG. 12

FIG. 13

FIG. 14

FIG. 15

FIG. 16

FIG. 17

Legend:
True model ——
P5, P95 ——
Darker is more probable

true model with levelmax=6

mean model from DWT samples

FIG. 18

FIG. 19

FIG. 20

mean of 100 forwards          noisy forward

The AVO characteristics as well as kinematics for both shot gathers are well matched

This includes multiples, refractions as well as reflections!

FIG. 21

FIG. 22

FIG. 23

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANANDAROOP RAY et al.** Frequency domain full waveform elastic inversion of marine seismic data from the Alba field using a Bayesian trans-dimensional algorithm. *Geophysical Journal International.,* vol. 205 (2), 915-937
- **RHYS HAWKINS et al.** Geophysical imaging using trans-dimensional trees. *Geophysical Journal International.,* vol. 203 (2), 972-1000
- **MRINAL K. SEN et al.** Transdimensional seismic inversion using the reversible jump Hamiltonian Monte Carlo algorithm. *Geophysics,* vol. 82 (3), R119-R134
- **RHYS HAWKINS et al.** Trans-dimensional Bayesian inversion of airborne electromagnetic data for 2D conductivity profiles. *Exploration Geophysics,* 2018, vol. 49, 134-147
- **JAN DETTMER et al.** Tsunami source uncertainty estimation: The 2011 Japan tsunami. *Journal of Geophysical Research: Solid Earth,* 2016, 4483-4505